(19) Europäisches Patentamt
European Patent Office
Office européen des brevets

(11) **EP 3 526 391 B1**

(12) **FASCICULE DE BREVET EUROPEEN**

(45) Date de publication et mention
de la délivrance du brevet:
**15.01.2025  Bulletin 2025/03**

(21) Numéro de dépôt: **17788182.8**

(22) Date de dépôt: **13.10.2017**

(51) Classification Internationale des Brevets (IPC):
*D06M 13/50* (2006.01)    *D06M 13/507* (2006.01)
*D06M 17/00* (2006.01)    *D06M 16/00* (2006.01)
*A41D 13/00* (2006.01)    *A62D 5/00* (2006.01)
*D06M 13/513* (2006.01)    *D06M 101/06* (2006.01)
*D06M 101/36* (2006.01)

(52) Classification Coopérative des Brevets (CPC):
**D06M 13/50; A41D 13/00; A62D 5/00;**
**D06M 13/507; D06M 13/513; D06M 16/00;**
**D06M 17/00;** D06M 2101/06; D06M 2101/36;
D06M 2200/10; D06M 2200/11; D06M 2200/12;
D06M 2400/02

(86) Numéro de dépôt international:
**PCT/EP2017/076247**

(87) Numéro de publication internationale:
**WO 2018/069528 (19.04.2018 Gazette 2018/16)**

(54) **PROCÉDÉ DE REVÊTEMENT SOLGEL DE MATERIAUX TEXTILES**

VERFAHREN ZUR SOL-GEL-BESCHICHTUNG VON TEXTIELMATERIALIEN

PROCCESS TO SOL-GEL COAT TEXTILE MATERIALS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **14.10.2016  FR 1659975**

(43) Date de publication de la demande:
**21.08.2019  Bulletin 2019/34**

(73) Titulaires:
• **Commissariat à l'Energie Atomique et aux
Energies
Alternatives
75015 Paris (FR)**
• **Centre National de la Recherche Scientifique
CNRS
75016 Paris (FR)**
• **Safran Electronics & Defense
75015 Paris (FR)**
• **Europrotect France SA
88000 Epinal (FR)**

(72) Inventeurs:
• **TRAN-THI, Thu-Hoa
92120 Montrouge (FR)**
• **GRINENVAL, Eva
92659 Boulogne Billancourt Cedex (FR)**
• **CHARTON, Philippe
88000 Epinal (FR)**
• **TIRARD, Franck
92659 Boulogne Billancourt Cedex (FR)**
• **CHATARD, Sébastien
88000 Epinal (FR)**

(74) Mandataire: **Plasseraud IP
104 Rue de Richelieu
CS92104
75080 Paris Cedex 02 (FR)**

(56) Documents cités:
EP-A- 1 147 072        DE-A1- 102008 010 457
DE-U1- 202005 013 330    FR-A1- 2 868 956
FR-A1- 2 976 952        US-A- 3 345 195
US-A1- 2002 006 518      US-A1- 2009 223 411

**EP 3 526 391 B1**

- **STEFAN BRZEZINSKI ET AL: "Applying the sol-gel method to the deposition of nanocoats on textiles to improve their abrasion resistance", JOURNAL OF APPLIED POLYMER SCIENCE, vol. 125, no. 4, 1 February 2012 (2012-02-01), pages 3058 - 3067, XP055026343, ISSN: 0021-8995, DOI: 10.1002/app.36353**
- **DATABASE WPI Week 200032, Derwent World Patents Index; AN 2000-369738, XP002773235**

**Description**

L'invention concerne un nouveau procédé de revêtement de matériaux textiles pour la préparation de textiles enduits présentant des propriétés de barrière au gaz.

Aujourd'hui, l'utilisation du charbon actif dans la filtration gazeuse est la solution idoine. Cependant le charbon actif piège mal les molécules toxiques de petite taille et polaires et il faut l'imprégner de divers produits chimiques adéquats pour compenser cette inefficacité. On trouve le charbon actif sous diverses formes de média mixtes avec du textile : textiles imprégnés de charbon actif et pressés, ou charbon actif collé au tissu. Dans ces cas, il devient difficile de laver le vêtement sans perdre les propriétés initiales du vêtement. Pour l'obtention d'une bonne protection contre les risques chimiques, une grande quantité de charbon actif est nécessaire, ce qui alourdit le vêtement. Par ailleurs pour la protection contre la projection de liquides corrosifs ou/et toxiques, il est nécessaire d'avoir un tissu déperlant, soit hydrophobe ou à la fois hydro- et oléophobe selon le domaine d'activité. Une autre propriété recherchée pour le vêtement de protection est sa résistance à l'usure par abrasion ou lavage.

On trouve les solutions les plus performantes pour les applications militaires. La protection contre les risques chimiques et biologiques concerne différents articles de protection (tenues, gants, chaussettes, cagoules, masques) destinés à éviter le contact des agents toxiques (sous forme liquide ou gazeuse) par voies cutanées et respiratoires. Ainsi, deux gammes d'articles de protection existent : ceux réalisés à base de matériaux étanches et ceux employant des matériaux filtrants et/ou respirants (perméables).

Avec un matériau étanche, le porteur est parfaitement protégé de la menace extérieure, mais son corps ne peut échanger de calories et d'humidité avec le milieu extérieur. Le port prolongé de ce type de tenue conduit donc irrémédiablement à des problèmes d'hyperthermie pouvant devenir mortels. Afin de pallier ce problème, des tenues employant des matériaux perméables à l'air et à la vapeur d'eau ont été mises au point. Ces tenues utilisent un ensemble de matériaux textiles comportant plusieurs couches. Actuellement, une tenue de protection militaire NBC (nucléaire, bactériologique, chimique) est constituée de deux couches aux caractéristiques et fonctions suivantes. La couche extérieure dont les fonctions principales sont d'assurer la robustesse de la tenue (résistance à l'abrasion et à la déchirure) et de garantir la non-pénétration des toxiques de guerre sous forme liquide. La non-pénétration des toxiques de guerre sous forme liquide correspond à la fonction de déperlance (hydrophobie/oléophobie). Cette fonction est obtenue par traitement superficiel du tissu extérieur avec une résine fluorée. La couche intérieure assure la fonction de filtration des toxiques sous forme gazeuse. Cette fonction est obtenue à partir de charbon actif sous différentes formes.

L'état de l'art fait ressortir plusieurs inventions par rapport à la couche intérieure (fonction filtration) des tenues de protection militaire NBC. Le charbon actif peut se retrouver sous différentes formes.

La demande de brevet EP 1468732 A2 décrit une monocouche de charbon actif qui est collée sur un matériau textile en doublure intérieure. Ces billes de charbon actif présentent préférentiellement une surface spécifique de 900 à 1200 m$^2$/g.

La demande de brevet FR 2868956 A1 décrit une maille de charbon activé dont les propriétés d'adsorption se caractérisent par une surface spécifique préférentielle d'environ 800 à 1200 m$^2$/g et par un pourcentage de microporosité préféré de 80 % à 100 %.

La demande de brevet WO 2015163969 A2 décrit un tissu de charbon actif contenant des nanoparticules d'oxydes métalliques pour filtres de gaz ou purification de liquides. La surface spécifique du tissu de charbon actif est donnée entre 100 et 2000 m$^2$/g. Le diamètre moyen des pores du charbon actif est compris entre 0,3 et 3 nm et représente 30 à 50% de la porosité globale.

Une texture activée en fibres de carbone possédant une activité bactéricide est décrite dans la demande de brevet FR 2819420 A1. Cette activité est due à un traitement par un adjuvant actif contre les effets des agents biologiques tels que les sels d'argent, les sels d'ammonium quaternaire, les sels de cuivre, les composés organophosphorés et leurs mélanges. La surface spécifique BET de la texture activée est en général de l'ordre de 1000 à 1200 m$^2$/g environ.

FR2868956A1 et WO2015163969A2 ne mentionnent pas du tout la notion de lavages. D'après EP1468732A2, le matériau filtrant et adsorbant (billes de charbon actif collées sur le tissu) est conçu pour être lavable et peut ainsi être décontaminé et régénéré. Cependant, aucun exemple ni aucune valeur ne sont donnés pour démontrer cette affirmation. FR2819420A1 sur la texture activée en fibres de carbone mentionne que l'étoffe complexe présente entre autres propriétés, une bonne lavabilité. Néanmoins aucune mesure des propriétés bactériostatiques ou bactéricides avant/après lavage n'est indiquée.

Par ailleurs, les notions de déperlance et de résistance à l'abrasion ne sont mentionnées pour aucun des médias rapportés dans tous les documents cités ci-dessus.

Brzezinski et al. (Journal of Applied Polymer Science, vol. 125, no. 4, p. 3058-3068) décrit la préparation de textiles comportant un revêtement sol-gel hybride SiO$_2$*/Al$_2$O$_3$ synthétisé à partir de (3-glycidoxypropyl)triméthoxysilane (GPTMOS) et d'isopropoxyde d'aluminium en présence d'acide chlorhydrique.

EP 1147072 A1 décrit des compositions de revêtement destinées au secteur du bâtiment. Aux exemples 1 et 2, ce document décrit des compositions aqueuses comprenant du N-octyltriéthoxysilane. US 2009/223411 A1, DE 10 2008 010457 A1, et JP 2000 119956 A décrivent le traitement de textiles par des matériaux sol-gel. Les compositions décrites dans ces documents comprennent un catalyseur.

D'autres travaux font appel aux matériaux nanoporeux élaborés par voie sol-gel pour la filtration de composés gazeux toxiques ou/et pour la protection contre les liquides corrosifs ou toxiques (propriété de déperlance), ou encore pour apporter des propriétés bactéricides. Ces travaux sont ici détaillés par catégorie de propriétés : filtration, déperlance, résistance aux lavages et à l'abrasion.

Les média mixtes textile/sol-gel peuvent être utilisés dans les procédés de filtration de particules, de gaz et de liquide (Surface Modification of Textiles, Q. Wei, 352 pages, Woodhead Publishing Series in Textiles, 1st Edition (September 9, 2009), ISBN-13: 978-1845694197, Chapter 11 "Surface modification of textiles for composite and filtration applications").

L'état de l'art fait ressortir qu'il s'agit, dans la plupart des cas, de filtrer des liquides et plus particulièrement l'eau. Pour retenir des polluants tels que les métaux lourds ($Cu^{2+}$, $Hg^{2+}$), des précurseurs silicés fonctionnalisés avec des fonctions amines, N-[3-(triméthoxysilyl)propyl]éthylènediamine, sont utilisés (CN 101787654). D'autres membranes poreuses à base de sol-gel, déposées sur des matériaux textiles (viscose, polyester, polyéthylène, polypropylène, styrène-butadiène) sont obtenues avec des tailles de pores variant de 10 à 1000 nm et sont utilisées pour le traitement des eaux usées ou de l'eau potable (CN 102371125). Liu et al. combinent l'utilisation de la poudre de charbon actif avec un système photocatalytique $Ce^{3+}$-$TiO_2$, immobilisés via une membrane sol-gel, pour décontaminer l'eau et enlever en particulier le bisphénol A (Chem. Eng. J., 2010, 156, 3, 553-556, Adsorptive removal and oxidation of organic pollutants from water using novel membrane).

Dans le domaine de la filtration de l'air et des gaz avec des textiles sol-gel, il existe très peu d'études. Chen et al. ont proposé des fibres textiles (polyoléfine, polyester, polyamide) imprégnés de sol-gel à base de vinyltriméthoxysilane comme filtres à air pour les appareils d'air conditionné (CN 1632215). D'autres textiles filtrants contiennent des agents antibactériens (DE 102005031711) ou des fongicides, insecticides, répulsifs, substances odoriférantes, huiles essentielles (DE 202008016598). Le procédé sol-gel est également à l'origine de la demande de brevet SK 500372013 et concerne un textile multifonctionnel à effet camouflage, hydrophobe, auto-nettoyant et antibactérien. Toutefois, la demande de brevet porte davantage sur les propriétés du tissu (poids, composition, armure, propriétés mécaniques) que sur les formulations sol-gel en elles-mêmes. Il est seulement mentionné qu'un revêtement hydrophobe est obtenu grâce à un mélange d'organosilanes contenant un biogène ou des nanoparticules à base d'ions argent, ou un revêtement mixte hydrophobe/antibactérien.

La durabilité du revêtement est également une propriété importante des textiles utilisés pour les tenues de protection contre les toxiques chimiques civiles ou militaires. Elle traduit aussi l'accroche du sol-gel sur le textile. Dans le cas de matériaux tels que le coton ou la cellulose, l'adhésion du sol-gel est facilement augmentée par la condensation chimique de groupements silanols avec les groupements hydroxyles de la surface textile : la nature même du sol-gel suffit à permettre l'accroche de celui-ci sur certaines natures de fibres textiles (J. Colloid Interf. Sci. 2005, 289, 249-261, Silane adsorption onto cellulose fibers: Hydrolysis and condensation reactions, M.-C. B. Salon, M. Abdelmouleh, S. Boufi, M. N. Belgacem, A. Gandini). La condensation chimique d'alcoxydes de silicium sur la cellulose est connue pour apparaître après traitement thermique au-dessus de 100°C (Langmuir 2005, 18, 3203-3208, Interaction of Silane Coupling Agents with Cellulose, M. Abdelmouleh, S. Boufi, A. B. Salah, M. N. Belgacem, A. Gandini). Dans la pratique, ceci est cohérent puisque les dépôts de sol-gel sur tissu, par exemple suivant le procédé décrit dans FR2984343A1, sont séchés préférentiellement entre 120 et 180°C afin d'assurer la condensation des précurseurs sol-gel, l'élimination de solvants, et la réaction de condensation des anhydrides d'acides catalysés par l'hypophosphite de sodium.

La demande de brevet de FR2984343A1 rapporte que l'accroche de la formulation sol-gel au tissu peut être réalisée par incorporation d'acide polycarboxylique et d'un catalyseur (hypophosphite de sodium). Le rôle de l'acide polycarboxylique est de favoriser le pontage entre le matériau et les précurseurs silicés hydrolysés. Le rôle du catalyseur est d'assurer le greffage de l'acide polycarboxylique sur le matériau en catalysant la formation d'un intermédiaire anhydre d'acide à partir de l'acide polycarboxylique (formation d'une fonction ester avec les fonctions alcool libres à la surface du support). Ces deux composés chimiques ont donc pour objectif d'améliorer l'accroche chimique des chaînes polycondensées. La durabilité du revêtement est affirmée améliorée, notamment vis-à-vis de l'abrasion et des lavages. Les tests en rapport à la durabilité aux lavages et à la résistance à l'abrasion sont reportés pour le seul exemple de réalisation donné utilisant une formulation sol-gel à partir du silane hydrophobe hexadécyltriméthoxysilane.

Dans de nombreux cas, l'état de surface du sol-gel est décrit comme lisse avec des solvants organiques tandis que le même sol-gel préparé dans l'eau conduit à des revêtements formant les fissures (J. Sol-Gel Sci. Technol. 2005, 34, 103-109, Hydrophobie Silica Sol Coatings on Textiles - the Influence of Solvent and Sol Concentration, B. Mahltig, F. Audenaert, H. Böttcher). D'après Mahltig et al., cet effet se produit principalement pour les fibres synthétiques qui sont relativement hydrophobes. Une certaine quantité d'un solvant moins polaire que l'eau améliore le mouillage de ces matériaux et améliore ainsi le revêtement résultant. L'article de Mahltig et al. fait état de l'influence d'un co-solvant organique pour l'obtention de revêtements hydrophobes.. Lorsque le solvant est uniquement l'eau, des fissures sont observées sur le revêtement, ce qui accélère l'abrasion du tissu.

D'autres travaux mentionnent l'utilisation d'organosols (précurseurs sol-gel mixtes organique-inorganiques) pour l'imprégnation de textiles. Le brevet US 8,926,744 B2 revendique un grand nombre de formulations sol-gel impliquant la plupart des précurseurs silicés commercialisés et l'absence d'agents dispersants dans les formulations. L'objectif le plus important visé dans ce brevet est la stabilisation des formulations pour le stockage du sol et un usage différé de ce dernier pour diverses applications, comme les revêtements sur substrats solides ou encore l'imprégnation de textiles avec pour ce dernier exemple une dilution de la formulation avec de l'eau. Le procédé mis en jeu, procédé Advantex, est complexe et implique plusieurs étapes : la première correspond à la réaction entre trois précurseurs silicés, un alcoxysilane fonctionnalisé, un siloxane cyclique et un siloxane méthylé et hydrogéné en présence de catalyseurs pour l'obtention d'un polysiloxane mixte méthylé et méthylé-hydrogéné (produit A). La 2ème étape correspond à la réaction de ce dernier avec un dérivé allylique (C3H5R) porteur d'une fonction en présence d'un catalyseur (Pt) pour la transformation des groupements SiH du composé A en Si-C2H4R porteur de la fonction R. Les réactions ont lieu dans des solvants organiques, et en particulier dans des alcools, qui doivent être partiellement éliminés sous vide partiel à 150°C. Des variantes de ce protocole sont proposées, selon les siloxanes et précurseurs silicés utilisés.

Pour les applications concernant les textiles, les auteurs revendiquent le toucher du tissu (douceur de l'étoffe traitée), la résistance à l'enfoncement d'une aiguille de machine à coudre, la résistance à l'abrasion (de 9000 à 31000 cycles au test de la Martindale pour divers textiles et formulations). Les propriétés de filtration/barrière ne sont pas partie des applications visées. De même les notions de porosité, distribution de tailles de pores du matériau de revêtement et de l'environnement intrapore ou encore la perméabilité ne sont pas évoquées.

Au vu de ce qui précède, il n'existe pas de textile enduit conciliant un procédé de fabrication simple avec des propriétés de filtration et de déperlance et une bonne lavabilité du textile. Les tenues de protection contre les toxiques chimiques civils ou militaires, nécessitent en effet :

- de pouvoir arrêter les produits toxiques polaires et non polaires et en particulier les molécules de petite taille et polaires que piège mal le charbon actif tout en laissant passer la vapeur d'eau et l'air ;
- d'augmenter la résistance à l'abrasion et au lavage ;
- d'assurer le compromis confort (perméabilité à l'air)/protection (filtration).

Un but de l'invention est donc de proposer un procédé de fabrication d'un textile enduit simple et efficace permettant d'atteindre ces performances.

Il est du mérite des inventeurs d'avoir découvert, de manière très inattendue et après de nombreuses recherches, qu'il était possible de préparer des textiles imprégnés d'un matériau sol-gel de façon simple et efficace sans mettre en oeuvre d'acide polycarboxylique et de catalyseur.

Un matériau sol-gel est un matériau obtenu par un procédé sol-gel consistant à utiliser comme précurseurs des alcoxydes métalliques de formule $M(OR)_x R'_{n-x}$ ou M est un métal, notamment le silicium, R un groupement alkyle et R' un groupement porteur d'une ou de plusieurs fonctions avec n= 4 et x pouvant varier entre 2 et 4. En présence d'eau, les groupements alkoxy (OR) sont hydrolysés en groupements silanols (Si-OH). Ces derniers se condensent en formant des liaisons siloxane (Si-O-Si-). Il se forme des petites particules de taille généralement inférieure à 1 $\mu$m, qui s'agrègent et forment des amas qui restent en suspension sans précipiter, formant un sol. L'augmentation des amas et leur condensation augmente la viscosité du milieu qui gélifie. Un matériau solide poreux est obtenu par séchage du gel, avec l'expulsion du solvant ou des solvants en dehors du réseau polymérique formé (synérèse).

Un objet de l'invention se rapporte donc à un procédé de revêtement d'un matériau textile, ledit procédé comprenant les étapes suivantes :

a) fournir une composition de revêtement comprenant un solvant aqueux et un précurseur organosilicé,
b) imprégner le matériau textile par foulardage avec la composition de revêtement,
c) sécher le matériau textile imprégné,

caractérisé en ce que la composition de revêtement est exempte d'acide polycarboxylique et de catalyseur.

Contrairement aux textiles imprégnés préparés selon l'art antérieur avec une composition de revêtement contenant de l'acide polycarboxylique, les textiles obtenus avec le procédé selon l'invention permettent de filtrer les gaz toxiques polaires et apolaires. De manière inattendue et surprenante et comme démontré à l'exemple 2, l'incorporation d'un acide polycarboxylique modifie le sol-gel le rendant inadapté à une application en filtration gaz, notamment polaire.

La composition de revêtement est en plus exempte de catalyseur. En effet, du fait de l'absence d'acide polycarboxylique, la composition de revêtement selon l'invention ne nécessite pas non plus la présence d'un catalyseur de la formation d'un intermédiaire anhydre d'acide à partir de l'acide polycarboxylique, comme les catalyseurs phosphorés tels que l'hypophosphite de sodium. Ainsi, la composition de revêtement est notamment exempte d'un tel catalyseur. Le terme catalyseur au sens de l'invention comprend aussi les acides, notamment les acides minéraux, tel que l'acide chlorhydrique, et les acides monocarboxyliques.

Avantageusement, la composition de revêtement est de plus exempte de surfactant. En effet, la présence de surfactant modifierait le sol-gel en induisant la formation d'un réseau de pores de tailles élevées, soit de mésopores (20-500 Å) voire de macropores (> 500 Å), ce qui nuirait à la propriété de filtration.

Le matériau textile imprégné selon l'invention est souple, léger, respirable, déperlant, résistant à l'abrasion et aux lavages multiples et présente des propriétés de barrière aux gaz toxiques polaires et non polaires.

Le matériau textile utilisé peut être de tout type. Il peut par exemple s'agir d'un tissu, d'un non tissé ou d'un tricot, de préférence d'un tissu. Avantageusement, le matériau textile comprend des fibres comportant des fonctions hydrolysables, telles que des fonctions hydroxyles. Un exemple d'une telle fibre est la cellulose présente dans des fibres naturelles comme le coton ou des fibres artificielles comme la viscose. De préférence, il s'agit de-fibres de viscose. Les fibres comportant des fonctions hydrolysables peuvent être utilisés seules, en mélange entre elles et/ou en mélanges avec d'autres fibres synthétiques comme des fibres de polyamide, de polyamide/imide, de polyméta-phénylène téréphtalamide, de polypara-phénylène téréphtalamide, d'acrylique, de modacrylique, de polyestertéréphtalate, de polyacrylonitrile oxydé. Dans un mode de réalisation préféré, le matériau textile est un matériau à base d'un mélange intime de viscose et de fibres synthétiques, de préférence de fibres de polyamide, notamment de polyamide aromatique. Un exemple d'un tel tissu est le Kermel®/Lenzing FR® 50 :50.

Le solvant aqueux utilisé dans la composition de revêtement peut être de l'eau ou un mélange d'eau et d'un solvant organique, notamment polaire, protique ou aprotique. Ce solvant organique peut par exemple être choisi parmi les alcools aliphatiques linéaires en C1 à C4, notamment le méthanol, l'éthanol et le propan-1-ol, et l'acétonitrile. De préférence, le solvant organique est de l'éthanol ou de l'acétonitrile. Le solvant aqueux contient 50 % à 100%, de préférence 85 % à 100% en volume d'eau.

Le solvant aqueux représente 50 à 92% en volume, de préférence 65 à 92% en volume de la composition de revêtement.

Le précurseur organosilicé utilisé dans la composition de revêtement peut être constitué d'un précurseur organosilicé unique ou d'un mélange de précurseurs organosilicés. Il est avantageusement choisi parmi le tétraméthoxysilane (TMOS), le tétraéthoxysilane (TEOS), le méthyl triméthoxysilane (MTM), le méthyl triéthoxysilane (MTE), le phényltriméthoxysilane (PhTMOS), le phényltriéthoxysilane (PhTEOS), un fluoroalkyltriméthoxysilane, un fluoroalkyltriéthoxysilane, un chloroalkylméthoxysilane, un chloroalkyléthoxysilane, un aminopropyltriéthoxysilane, le (3-glycidyloxypropyl)triméthoxysilane (GPTMOS) et leurs mélanges, de préférence parmi le tétraméthoxysilane (TMOS), le méthyl triméthoxysilane (MTM), le phényltriméthoxysilane (PhTMOS), un fluoroalkyltriméthoxysilane, un chloroalkylméthoxysilane, un aminopropyltriéthoxysilane (APTES), le (3-glycidyloxypropyl)triméthoxysilane (GPTMOS) et leurs mélanges, de préférence encore parmi le tétraméthoxysilane (TMOS), le méthyl triméthoxysilane (MTM), le trifluoropropyl triméthoxysilane (3FTMOS), le 1H,1H,2H,2H-perfluorodécyltriéthoxysilane (13FTMOS), le 1H,1H,2H,2H-perfluoroheptadécyltriéthoxysilane (17FTMOS), l'aminopropyl triéthoxysilane (APTES), le phényltriméthoxysilane (PhTMOS), le (3-glycidyloxypropyl)triméthoxysilane (GPTMOS) et leurs mélanges. Dans une variante particulière, le précurseur organosilicé est choisi parmi le tétraméthoxysilane (TMOS), le tétraéthoxysilane (TEOS), le méthyl triméthoxysilane (MTM), le méthyl triéthoxysilane (MTE), le phényltriémthoxysilane (PhTMOS), le phényltriéthoxysilane (PhTEOS), un fluoroalkyltriméthoxysilane, un fluoroalkyltriéthoxysilane, un aminopropyltriéthoxysilane, le (3-glycidyloxypropyl)triméthoxysilane (GPTMOS) et leurs mélanges, de préférence parmi le tétraméthoxysilane (TMOS), le méthyl triméthoxysilane (MTM), le phényltriémthoxysilane (PhTMOS), un fluoroalkyltriméthoxysilane, un aminopropyltriéthoxysilane (APTES), le (3-glycidyloxypropyl)triméthoxysilane (GPTMOS) et leurs mélanges, de préférence encore parmi le tétraméthoxysilane (TMOS), le méthyl triméthoxysilane (MTM), le trifluoropropyl triméthoxysilane (3FTMOS), le 1H,1H,2H,2H-perfluorodécyltriéthoxysilane (13FTEOS), le 1H,1H,2H,2H-perfluoroheptadécyltriéthoxysilane (17FTEOS), l'aminopropyl triéthoxysilane (APTES), le phényltriméthoxysilane (PhTMOS), le (3-glycidyloxypropyl)triméthoxysilane (GPTMOS) et leurs mélanges.

Dans un mode de réalisation, le précurseur organosilicé est du tétraméthoxysilane. Dans un autre mode de réalisation le précurseur organosilicé est un mélange de tétraméthoxysilane avec un précurseur choisi parmi le méthyl triméthoxysilane (MTM), le méthyl triéthoxysilane (MTE), le phényltriémthoxysilane (PhTMOS), le phényltriéthoxysilane (PhTEOS), un fluoroalkyltriméthoxysilane, un fluoroalkyltriéthoxysilane, un chloroalkylméthoxysilane, un chloroalkyléthoxysilane, un aminopropyltriéthoxysilane, le (3-glycidyloxypropyl)triméthoxysilane (GPTMOS) et leurs mélanges, de préférence parmi le méthyl triméthoxysilane (MTM), lephényltriméthoxysilane (PhTMOS), un fluoroalkyltriméthoxysilane, un chloroalkylméthoxysilane, un aminopropyltriéthoxysilane, le (3-glycidyloxypropyl)triméthoxysilane (GPTMOS) et leurs mélanges, de préférence encore parmi le méthyl triméthoxysilane (MTM), le trifluoropropyl triméthoxysilane (3FTMOS), le 1H,1H,2H,2H-perfluorodécyltriéthoxysilane (13FTMOS), le 1H,1H,2H,2H-perfluoroheptadécyltriéthoxysilane (17FTMOS), l'aminopropyl triéthoxysilane (APTES), le phényltriméthoxysilane (PhTMOS), le (3-glycidyloxypropyl)triméthoxysilane (GPTMOS) et leurs mélanges. Dans une variante, le mélange ne contient ni chloroalkylméthoxysilane ni chloroalkyléthoxysilane. Des mélanges de précurseurs organosilicés préférés comprennent les mélanges de tétraméthoxysilane (TMOS) avec du méthyl triméthoxysilane (MTM), avec de l'aminopropyl triéthoxysilane (APTES), avec du trifluoropropyl triméthoxysilane (3FTMOS), avec du 1H,1H,2H,2H-perfluorodécyltriméthoxysilane (13FTMOS), avec du 1H,1H,2H,2H-perfluoroheptadécyltriméthoxysilane (17FTMOS), avec de l'aminopropyl triméthoxysilane (APTMS) et du trifluoropropyl triméthoxysilane (3FTMOS), avec de l'aminopropyl triéthoxysilane (APTES) et du 1H,1H,2H,2H-perfluorodécyltriéthoxysilane (13FTEOS), avec de l'aminopropyl triéthoxysilane (APTES) et du 1H,1H,2H,2H-perfluoroheptadécyltriéthoxysilane (17FTOS), avec du phényltriméthoxysilane (PhTMOS), avec du (3-glycidyloxypropyl)triéthoxysilane (GPTEOS), avec du phényltriéthoxysilane (PhTEOS) et du (3-glycidyloxypropyl)triméthoxysilane (GPTMOS), et avec du 1H,1H,2H,2H-perfluoroheptadécyltriéthoxysilane (17FTEOS) et du (3-glycidyloxypropyl)triméthoxysilane (GPTMOS). Des performances d'accrochage et de filtration particulièrement bonnes ont été obtenues avec un mélange de TMOS et de (3-glycidyloxypropyl)triméthoxysilane (GPTMOS) et des mélanges de TMOS et de PhTMOS respectivement.

Lors de l'utilisation d'un mélange de tétraméthoxysilane et d'un ou plusieurs autres précurseurs organosilicés, les proportions molaires de tétraméthoxysilane (TMOS)/autre(s) précurseur(s) organosilicé(s) peuvent être variées entre 100/0 et 50/50, de préférence ente 90/10 et 75/25.

Le précurseur organosilicé représente avantageusement 8 à 50% en volume, de préférence 8 à 35% en volume de la composition de revêtement.

Selon un premier mode de réalisation particulier, la composition de revêtement est directement appliquée sur le matériau textile. Cette stratégie utilise directement la fonctionnalité des précurseurs organosilicés utilisés pour la fonction barrière pour l'accrochage du sol-gel au textile, via notamment des fonctions hydroxyles à la surface.

Selon un deuxième mode de réalisation particulier, le procédé selon l'invention comprend, avant l'étape b), une étape d'application d'une composition de pré-revêtement comprenant un solvant organique et un alcoxyde de zirconium, ladite composition de pré-revêtement étant exempt d'acide polycarboxylique. Du fait de l'absence d'acide polycarboxylique, la composition de pré-revêtement selon l'invention ne nécessite pas non plus la présence d'un catalyseur de la formation d'un intermédiaire anhydre d'acide à partir de l'acide polycarboxylique, comme les catalyseurs phosphorés tels que l'hypophosphite de sodium. Ainsi, la composition de pré-revêtement est avantageusement exempte d'un tel catalyseur.

Le $Zr^{4+}$ possède un nombre de coordination élevé (+7) ce qui favorise l'accroche au matériau textile via la complexation avec les fonctionnalités provenant du textile. L'application de la composition de revêtement à l'étape b) vient recouvrir cette première couche d'accrochage pour former le revêtement « barrière ». L'alcoxyde de zirconium peut être choisi parmi tétra-n-propyl zirconate (CAS 23519-77-9), tétra-n-butyl zirconate (CAS 1071-76-7), tétra-iso-propyl zirconate (CAS 14717-56-7), tétra-tert-butyl zirconate (2081-12-1), bis(diéthyl citrato)-dipropyl zirconate (CAS 308847-92-9), bis(2,2,6,6-tétraméthyl-3,5-heptanedionate)-di-iso-propyl zirconate (CAS 204522-78-1), de préférence on choisira le tétra-n-propyl zirconate (TPOZ).

Le matériau textile est imprégné par foulardage avec la composition de revêtement. Le foulardage comporte une étape d'imprégnation du matériau textile dans le sol suivi d'une étape d'exprimage sous pression qui permet d'évacuer le surplus de sol. Comparé à d'autre technique de revêtement, comme par exemple l'enduction par trempage (anglais : dip-coating), cette technique permet d'obtenir une distribution uniforme du sol ainsi qu'une meilleure imprégnation du sol dans le tissu. Les images de microscopie électronique par balayage montrent que l'application de la composition de revêtement selon l'invention par foulardage résulte en un gainage des fibres textiles. L'enduction par trempage par contre résulte en un dépôt non homogène et essentiellement en surface du fait qu'elle consiste du trempage du matériau textile dans la solution d'enduction suivi de la sortie du matériau textile à la verticale. Cette sortie à la verticale est inévitablement accompagnée de la formation d'un gradient de dépôt vers le bas du matériau textile. De plus, le simple trempage dans la solution d'enduction ne permet pas de garantir une imprégnation du matériau textile et ainsi un gainage des fibres. Ce gainage des fibres est toutefois important pour conférer les propriétés souhaitées au matériau textile. Des résultats particulièrement bons en termes de gainage des fibres ont été obtenus avec des compositions de revêtement ayant une viscosité dynamique inférieure ou égale à 10 mPa.s (10 cP). La viscosité dynamique peut par exemple être mesurée à l'aide d'un rhéomètre « Physica MCR 301 » commercialisée par la société Anton Paar tel que décrit aux exemples ci-après.

L'étape b) d'imprégnation du matériau textile par foulardage peut être effectuée une seule fois ou répétée plusieurs fois. Le procédé selon l'invention peut notamment comporter 1 à 4 cycles successifs d'imprégnation du matériau textile par foulardage.

Dans un mode de réalisation, le procédé selon l'invention comprend en outre une étape d'immobilisation de granulés de sol-gel sur au moins l'une des deux faces du matériau textile afin d'augmenter la masse surfacique de sol-gel. Le matériau textile imprégné et comportant des granulés sol-gel ainsi obtenu présente une masse surfacique de 60 à 500 $g/m^2$, de préférence de 80 à 400 $g/m^2$ et de préférence encore de 100 à 300 $g/m^2$.

De manière préférée, la face du matériau textile imprégné comportant les granulés sol-gel immobilisés est recouverte par une deuxième couche de matériau textile. Ce matériau textile peut être identique à ou différent du matériau textile utilisé pour l'imprégnation. De préférence, on utilisera le même type, plus préférentiellement le même, matériau.

Comme indiqué précédemment, la face du matériau textile comportant les granulés immobilisés peut être recouverte par une deuxième couche de matériau textile. Cette deuxième couche de matériau textile peut notamment être appliquée après le séchage du matériau textile imprégné et comportant les granulés de sol-gel immobilisés. Ainsi, dans un aspect du présent mode de réalisation, le procédé selon l'invention comprend, après l'étape de séchage c), l'application d'une deuxième couche de matériau textile sur le matériau textile imprégné et comportant les granulés de sol-gel immobilisés. Cette deuxième couche de matériau textile sert notamment de protection pour éviter la chute des granulés immobilisés suite, par exemple, à des frottements. La deuxième couche de matériau textile peut être solidarisée avec le matériau textile imprégné et comportant les granulés de sol-gel immobilisés, notamment par coutures, soudures ou par collage, par exemple sous forme de points ou lignes de collage. Ces coutures, soudures (thermofusion) ou points ou lignes de collage peuvent par exemple être appliquée de façon à former des zones de confinement. L'homme du métier saura choisir la manière la plus adaptée pour solidariser les matériaux textiles entre eux en fonction de la nature du ou des matériaux textiles utilisés. La thermofusion, par exemple, convient pour des matériaux textiles contenant des fibres modacrylique, seules ou en mélange, notamment avec du coton, du fait qu'elles ramollissent vers 140°C et fondent sans brûler et sans transmettre la flamme.

L'immobilisation des granulés sol-gel peut être réalisée de façon simultanée à l'imprégnation avec la composition de revêtement ou après celle-ci. De préférence, l'étape d'immobilisation de granulés de sol-gel est mise en oeuvre après l'étape de séchage c). Dans ce cas, les granulés peuvent par exemple être collés sur au moins une des faces, de préférence sur une seule des faces, du matériau textile. L'homme du métier choisira la colle notamment en fonction du matériau textile utilisé. Des colles généralement appropriées comprennent les colles acryliques. La face sur laquelle les granulés ont été collés peut être recouverte avec une couche de matériau textile, par exemple non-tissé, pour améliorer le maintien des granulés sol-gel. Plus particulièrement, l'immobilisation de granulés sol-gel peut être réalisée par enduction d'une couche de colle, notamment de type acrylique, sur une face d'un matériau textile imprégné obtenu à l'issu de l'étape c) du procédé selon l'invention, puis dépôt d'une monocouche de granulés sol-gel sur la face enduite de colle par un système de trémie et aspiration des granulés non collés et enfin un dépôt d'un matériau textile, par exemple non-tissé, pour améliorer le maintien des granulés sol-gel. Les granulés peuvent aussi être immobilisés sans colle entre deux couches de matériau textile, dont au moins une est un matériau textile obtenu à l'issu de l'étape c) du procédé selon l'invention. Pour ceci les deux couches de matériau textile peuvent être solidarisées entre elle par tout moyen approprié, comme par exemple des coutures, soudures (thermofusion) ou par collage, par exemple sous forme de points ou de lignes de collage, mais aussi application de la colle sur toute la surface concernée. Dans un aspect particulier, les granulés de sol-gel sont immobilisés entre deux couches de matériau textile, dont au moins une est un matériau textile obtenu à l'issu de l'étape c) du procédé de l'invention, dans des zones confinement définie par couture, soudure (thermofusion) ou collage. L'homme du métier saura choisir la manière la plus adaptée pour délimiter les zones de confinement en fonction de la nature du ou des matériaux textiles utilisés.

Les granulés sol-gel peuvent être préparés à partir des mêmes précurseurs ou combinaisons de précurseurs organosilicés que le matériau sol-gel avec lequel le matériau textile est imprégné. Ainsi, les précurseurs et combinaison de précurseurs organosilicés cités ci-dessus en relation avec la composition de revêtement peuvent également être utilisés pour la préparation des granulés sol-gel. Ces granulés peuvent être préparés selon les méthodes de préparation connues de l'homme du métier. A titre d'exemple de synthèse de granulé de sol-gel, on peut citer la synthèse de disques poreux pour le piégeage des hydrocarbures monocycliques et leur détection optique (Benzene and xylene détection by absorbance in the range of 10-100 ppb. Application: Quality of indoor air, J. Hue, M. Dupoy, T. Bordy, R. Rousier, S. Vignoud, B. Schaerer, T.-H. Tran-Thi, C. Rivron, L. Mugherli, P. Karpe, Sensors & Actuators B, 189 (2013) 194- 198, http://dx.doi.org/10.1016/j.snb.2013.03.047).

Dans un mode de réalisation, le matériau textile mis en oeuvre à l'étape b) du procédé selon l'invention est séché préalablement à l'imprégnation avec la composition de revêtement afin d'éliminer l'eau en surface. Ce séchage est particulièrement avantageux dans le cas de matériaux textiles incorporant des fibres cellulosiques comme le coton ou la viscose. L'homme du métier saura adapter la température et la durée de séchage en fonction du matériau textile et de la teneur en eau, notamment en surface. Avantageusement, le matériau textile est séché à une température de 80 à 180°C, de préférence de 100 à 150°C, de préférence encore d'environ 120°C. La durée de séchage est avantageusement de quelques minutes, par exemple de 2 à 10 minutes, notamment de 2 à 5 minutes.

Un autre objet de l'invention est la composition de revêtement telle que décrite ci-dessus., dans laquelle le solvant aqueux représente 65 à 92% en volume de la composition de revêtement.

Le solvant aqueux contenant 50% à 100% de préférence 85% à 100% en volume d'eau.

L'invention a également pour objet un matériau textile imprégné obtenu par le procédé de revêtement selon l'invention décrit ci-dessus. Il s'agit donc d'un matériau textile imprégné d'un matériau sol-gel. Toutes les précisions et modes de réalisation exposés ci-dessus pour la nature du matériau textile et le matériau sol-gel sont également valables pour le matériau textile imprégné selon l'invention. Le matériau textile imprégné selon l'invention est notamment caractérisé en ce qu'il présente une surface spécifique $S_{BET}$ (déterminée à partir des isothermes d'adsorption à l'aide du modèle de Brunauer, Emmet et Teller (BET)) comprise entre $330 \pm 30$ et $880 \pm 30$ $m^2.g^{-1}$, notamment entre $540 \pm 30$ et $880 \pm 30$ $m^2.g^{-1}$. La proportion de micropores (< 20 Å) est de préférence supérieure à 0 %, de préférence supérieure à 30 % et plus préférentiellement encore supérieure à 50 %. La proportion de mésopores (20 Å - 500 Å) est de préférence inférieure à 70 %, et plus préférentiellement encore inférieure à 50 %. Le matériau textile est de préférence exempt de macropores (>500 Å). La masse surfacique du matériau sol-gel peut varier de 1 à 500 $g/m^2$, de préférence de 5 à 400 $g/m^2$,

de préférence encore de 10 à 300 g/m$^2$.

Lorsque le matériau textile imprégné selon l'invention comporte en outre des granulés sol-gel immobilisés sur au moins une de ses faces tel que décrit plus haut, il présente avantageusement une masse surfacique de 60 à 500 g/m$^2$, de préférence de 80 à 400 g/m$^2$ et de préférence encore de 100 à 300 g/m$^2$. Lorsque le matériau textile imprégné selon l'invention ne comporte pas de granulés sol-gel immobilisés, il présente avantageusement en un dépôt une masse surfacique de 1 à 60 g/m$^2$, de préférence de 5 à 50 g/m$^2$ et de préférence encore de 10 à 40 g/m$^2$.

Le matériau textile imprégné selon l'invention trouve une application particulière pour la filtration de gaz, notamment pour les équipements de protection individuelle comme par exemple les vêtements, notamment contre des toxiques chimiques, mais aussi pour les textiles visant à protéger les voies respiratoires (masques), les textiles qui absorbent les odeurs indésirables comme la friture ou le tabac, tels que par exemple les filtres consommables. L'invention concerne donc également un filtre, notamment de gaz, comprenant le matériau textile selon l'invention.

Un objet particulier de l'invention est un équipement de protection individuelle comprenant le matériau textile selon l'invention. Cet équipement de protection individuelle peut par exemple être une combinaison intégrale, un pantalon, une veste, des gants, cagoules, chaussettes, masques. Grâce aux propriétés fonctionnelles, notamment de filtration de gaz toxiques polaires et apolaires du matériau textile selon l'invention, l'équipement de protection individuelle est particulièrement adapté aux risques NBC (nucléaire, bactériologique, chimique). Ainsi, dans un mode de réalisation, l'équipement de protection individuelle est un équipement de protection individuelle NBC.

Des exemples non limitatifs de réalisation de l'invention sont décrits ci-après.

## FIGURES

**Figure 1 :** Comparaison des courbes de perçage du salicylate de méthyle normalisées avec un dépôt de 20 g/m$^2$ pour le tissu initial, la formule H (stratégie I), la formule H' (stratégie II) et la formule H" (stratégie III). Avec illustration de mesure de $t_{1/2}$ pour l'échantillon H" avec $T_{max}$ la teneur finale en salicylate de méthyle et $t_{1/2}$ la durée de piégeage total ayant pour ordonnée $T_{max}$ / 2.

**Figure 2 :** (A) Comparaison des courbes de perçage du salicylate de méthyle normalisées avec des dépôts successifs de 20 g/m$^2$ pour le tissu initial et la formule J (stratégie I) ; (B) Comparaison des courbes de perçage du salicylate de méthyle normalisées avec des dépôts successifs de 20 g/m$^2$ pour le tissu initial et la formule A' (stratégie II).

**Figure 3 :** Comparaison des courbes de perçage du salicylate de méthyle obtenues avec le charbon actif, la formule L' ❸ et les formules N'+L' ❸

**Figure 4 :** (A) Vue schématique des composantes de l'outil de mesure du tombant du tissu ; (B) Schéma de principe de la mesure du tombant du tissu.

**Figure 5 :** (A) Photo du tissu initial dans l'outil de mesure du tombant du tissu ; (B) photo du tissu imprégné de la formulation K'.

**Figure 6 :** (A) Photo vue de dessus : tissu + sol-gel A' (gauche) / tissu (droite) ; (B) Photo vue de profil : tissu + sol-gel A' (gauche) / tissu (droite).

**Figure 7 :** Vue de dessus en MEB (microscopie électronique à balayage) du dépôt de la formulation A'.

**Figure 8 :** Vue en coupe en MEB du dépôt de la formulation A'.

**Figure 9 :** (A) Spectre IR brut : tissu initial, tissu + sol-gel A' avant abrasion, tissu + sol-gel A' après abrasion ; (B) Spectre IR différentiels : sol-gel A' avant abrasion, sol-gel A' après abrasion.

**Figure 10 :** Illustration de l'immobilisation de granulés sol-gel à l'exemple 5 : (A) photo du matériau textile utilisé pour le procédé d'immobilisation : deux couches cousues ensemble sur lesquelles des lignes ont été définies, (B1) et (B2) système utilisé pour introduire les granulés dans les lignes définies par couture à l'aide d'une pipette coupée, (C1) et (C2) Matériau textile obtenu par procédé d'immobilisation : délimitation des zones de confinement par couture.

**Figure 11 :** Graphes des résultats des essais de filtration avec du salicylate de méthyle de l'Exemple 5 sur 10 minutes.

**Figure 12 :** Graphes des résultats des essais de filtration avec du salicylate de méthyle de l'Exemple 5 sur 300 minutes.

**EXEMPLES**

**Produits chimiques utilisés**

- Tétraméthoxysilane (N° CAS : 681-84-5) (TMOS, Acros Organics, 99%) ;
- Tétraéthoxysilane (N° CAS : 78-10-4) (TEOS, Acros Organics, 98%) ;Méthyl triméthoxysilane (N° CAS : 1185-55-3) (MTM, Sigma-Aldrich, 98%) ;
- Trifluoropropyl triméthoxysilane (N° CAS : 429-60-7) (3FTMOS, TCI, >98%) ;
- 1H,1H,2H,2H-Perfluorodécyltriéthoxysilane (N° CAS : 51851-37-7) (13FTEOS, Sigma-Aldrich, 98%) ;
- 1H,1H,2H,2H-Perfluoroheptadécyltriéthoxysilane (N° CAS : 101947-16-4) (17FTEOS, Sigma-Aldrich, 97%) ;
- Aminopropyl triéthoxysilane (N° CAS : 919-30-2) (APTES, Acros Organics, 99%) ;
- Phényl triméthoxysilane (N° CAS : 2996-92-1) (PhTMOS, TCI, >98%) ;
- Phényl triéthoxysilane (N° CAS : 780-69-8) (PhTEOS, Sigma-Aldrich, ≥ Sigma-Aldrich) ;
- (3-Glycidyloxypropyl)triméthoxysilane (N° CAS : 2530-83-8) (GPTMOS, Sigma-Aldrich, ≥98%) ;
- Tétrapropyl zirconate 70 %$_{wt}$ dans le 1-propanol (N° CAS : 23519-77-9) (TPOZ, Sigma-Aldrich) ;
- Bis(diéthyl citrato)-dipropyl zirconate (N° CAS : 308847-92-9) (DPOZ, Sigma-Aldrich) ;
- Ethanol (N° CAS : 64-17-5) (Merck, Uvasol for spectroscopy);
- Acétonitrile (N° CAS : 75-05-8) (Merck, Lichrosolv gradient grade for liquid chromatography) ;
- Acide succinique (N° CAS : 110-15-6) (Sigma-Aldrich, Reagent Plus ≥99,0 %) ;
- Hypophosphite de sodium (N° CAS : 123333-67-5) (Sigma-Aldrich, hydrate).

**Mesure de la viscosité dynamique**

La viscosité dynamique des différentes formulations de l'Exemple 1 a été mesurée avec un rhéomètre « Physica MCR 301 » commercialisé par la société Anton Paar.

Le volume d'analyse est de 700 μL déposé sans ébavurage sur support thermostaté à 20°C. La viscosité est mesurée avec un cône plan en rotation à cisaillement constant (γ = 100 s-1). La méthode de mesure utilisée réalise 20 points de viscosité espacés de 20 secondes. Chaque mesure de viscosité correspond donc à une moyenne de 20 points. Les mesures sont exprimées en Pa.s.

**Exemple 1 : Préparation de tissus enduits**

**I. Préparation de tissus enduits selon la stratégie décrite dans FR 2984343 A1 (avec polyacide carboxylique et catalyseur)**

Les formulations A à K décrit ci-après ont été déposées sur des morceaux de 5 cm x 10 cm à 21 cm x 30 cm de tissu Kermel®/Lenzing ER® 50 :50 (Kermel, Colmar, France) (Lenzing AG, Lenzing, Autriche) par imprégnation plein bain et exprimage (principe du foulardage) puis les tissus ont été séchés à l'étuve 2 min à 120 °C et laissés au repos 24h à température ambiante et pression atmosphérique dans le laboratoire. Dans un autre mode réalisation, le matériau textile est un non-tissé, notamment un feutre. Un exemple d'un tel feutre est celui de Duflot Industries en Nomex®.

La quantité initiale déposée varie entre 15 et 31 g/m². La masse surfacique du matériau sol-gel est déduite par pesée du tissu avant et après imprégnation.

**Formulation A**

Dans un flacon en verre à fermeture hermétique, 0,164 g d'acide succinique et 0,174 g d'hypophosphite de sodium sont mélangés dans un volume de 22,13 mL d'eau ultra pure. Le mélange est agité à température ambiante (20-22°C) jusqu'à dissolution du polyacide et du catalyseur au repère 4 de la plaque à agitateurs multiples IKA WERKE RO10 power (environ 500 tr/min). Puis 2,873 mL de TMOS sont ajoutés au mélange initial.

Viscosité dynamique : 2,1 cP (mPa.s)

Le dépôt de cette formule sur textile indique une masse surfacique de 24 g/m².

**Formulation B**

Dans un flacon en verre à fermeture hermétique, 0,164 g d'acide succinique et 0,175 g d'hypophosphite de sodium sont mélangés dans un volume de 22,15 mL d'eau ultra pure. Le mélange est agité à température ambiante (20-22°C) jusqu'à dissolution du polyacide et du catalyseur au repère 4 de la plaque à agitateurs multiples IKA WERKE RO10 power (environ 500 tr/min). Puis 1,438 mL de TMOS et 1,415 mL de MTM sont ajoutés au mélange initial.
Viscosité dynamique : 2,0 cP (mPa.s)
Le dépôt de cette formule sur textile indique une masse surfacique de 18 g/m$^2$.

**Formulation C**

Dans un flacon en verre à fermeture hermétique, 0,164 g d'acide succinique et 0,174 g d'hypophosphite de sodium sont mélangés dans un volume de 22,14 mL d'eau ultra pure. Le mélange est agité à température ambiante (20-22°C) jusqu'à dissolution du polyacide et du catalyseur au repère 4 de la plaque à agitateurs multiples IKA WERKE RO10 power (environ 500 tr/min). Puis 2,012 mL de TMOS et 0,848 mL de MTM sont ajoutés au mélange initial.
Viscosité dynamique : 1,7 cP (mPa.s)
Le dépôt de cette formule sur textile indique une masse surfacique de 18 g/m$^2$.

**Formulation D**

Dans un flacon en verre à fermeture hermétique, 0,111 g d'acide succinique et 0,119 g d'hypophosphite de sodium sont mélangés dans 11,51 mL d'eau ultra pure et 11,51 mL d'éthanol. Le mélange est agité à température ambiante (20-22°C) jusqu'à dissolution du polyacide et du catalyseur au repère 4 de la plaque à agitateurs multiples IKA WERKE RO10 power (environ 500 tr/min). Puis 1,896 mL de TMOS et 0,085 mL d'APTES sont ajoutés au mélange initial.
Viscosité dynamique : 19,6 cP (mPa.s)
Le dépôt de cette formule sur textile indique une masse surfacique de 31 g/m$^2$.

**Formulation E**

Dans un flacon en verre à fermeture hermétique, 0,111 g d'acide succinique et 0,119 g d'hypophosphite de sodium sont mélangés dans 11,50 mL d'eau ultra pure et 11,50 mL d'éthanol. Le mélange est agité à température ambiante (20-22°C) jusqu'à dissolution du polyacide et du catalyseur au repère 4 de la plaque à agitateurs multiples IKA WERKE RO10 power (environ 500 tr/min). Puis 1,836 mL de TMOS et 0,170 mL d'APTES sont ajoutés au mélange initial.
Viscosité dynamique : 65 cP (mPa.s)
Le dépôt de cette formule sur textile indique une masse surfacique de 25 g/m$^2$.

**Formulation F**

Dans un flacon en verre à fermeture hermétique, 0,151 g d'acide succinique et 0,161 g d'hypophosphite de sodium sont mélangés dans 19,40 mL d'eau ultra pure et 2,91 mL d'acétonitrile. Le mélange est agité à température ambiante (20-22°C) jusqu'à dissolution du polyacide et du catalyseur au repère 4 de la plaque à agitateurs multiples IKA WERKE RO10 power (environ 500 tr/min). Puis 2,516 mL de TMOS et 0,175 mL de 3FTMOS sont ajoutés au mélange initial.
Viscosité dynamique : 2,1 cP (mPa.s)
Le dépôt de cette formule sur textile indique une masse surfacique de 15 g/m$^2$.

**Formulation G**

Dans un flacon en verre à fermeture hermétique, 0,150 g d'acide succinique et 0,160 g d'hypophosphite de sodium sont mélangés dans 19,26 mL d'eau ultra pure et 2,89 mL d'acétonitrile. Le mélange est agité à température ambiante (20-22°C) jusqu'à dissolution du polyacide et du catalyseur au repère 4 de la plaque à agitateurs multiples IKA WERKE RO10 power (environ 500 tr/min). Puis 2,499 mL de TMOS et 0,348 mL de 13FTEOS sont ajoutés au mélange initial.
Viscosité dynamique : 2,2 cP (mPa.s)
Le dépôt de cette formule sur textile indique une masse surfacique de 16 g/m$^2$.

**Formulation H**

Dans un flacon en verre à fermeture hermétique, 0,149 g d'acide succinique et 0,159 g d'hypophosphite de sodium sont mélangés dans 19,13 mL d'eau ultra pure et 2,87 mL d'acétonitrile. Le mélange est agité à température ambiante (20-22°C) jusqu'à dissolution du polyacide et du catalyseur au repère 4 de la plaque à agitateurs multiples IKA WERKE RO10 power (environ 500 tr/min). Puis 2,481 mL de TMOS et 0,524 mL de 17FTEOS sont ajoutés au mélange initial.
Viscosité dynamique : 4,8 cP (mPa.s)
Le dépôt de cette formule sur textile indique une masse surfacique de 19 g/m$^2$.

**Formulation 1**

Dans un flacon en verre à fermeture hermétique, 0,111 g d'acide succinique et 0,118 g d'hypophosphite de sodium sont mélangés dans 11,49 mL d'eau ultra pure et 11,49 mL d'éthanol. Le mélange est agité à température ambiante (20-22°C) jusqu'à dissolution du polyacide et du catalyseur au repère 4 de la plaque à agitateurs multiples IKA WERKE RO10 power (environ 500 tr/min). Puis 1,796 mL de TMOS, 0,129 mL de 3FTMOS et 0,095 mL d'APTES sont ajoutés au mélange initial.
Viscosité dynamique : 3,6 cP (mPa.s)
Le dépôt de cette formule sur textile indique une masse surfacique de 23 g/m$^2$.

**Formulation J**

Dans un flacon en verre à fermeture hermétique, 0,111 g d'acide succinique et 0,118 g d'hypophosphite de sodium sont mélangés dans 11,43 mL d'eau ultra pure et 11,43 mL d'éthanol. Le mélange est agité à température ambiante (20-22°C) jusqu'à dissolution du polyacide et du catalyseur au repère 4 de la plaque à agitateurs multiples IKA WERKE RO10 power (environ 500 tr/min). Puis 1,787 mL de TMOS, 0,257 mL de 13FTEOS et 0,094 mL d'APTES sont ajoutés au mélange initial.
Viscosité dynamique : 3,7 cP (mPa.s)
Le dépôt de cette formule sur textile indique une masse surfacique de 23 g/m$^2$.

**Formulation K**

Dans un flacon en verre à fermeture hermétique, 0,111 g d'acide succinique et 0,118 g d'hypophosphite de sodium sont mélangés dans 11,41 mL d'eau ultra pure et 11,41 mL d'éthanol. Le mélange est agité à température ambiante (20-22°C) jusqu'à dissolution du polyacide et du catalyseur au repère 4 de la plaque à agitateurs multiples IKA WERKE RO10 power (environ 500 tr/min). Puis 1,784 mL de TMOS, 0,294 mL de 17FTEOS et 0,094 mL d'APTES sont ajoutés au mélange initial.
Viscosité dynamique : 18 cP (mPa.s)
Le dépôt de cette formule sur textile indique une masse surfacique de 21 g/m$^2$.

**II. Préparation de tissus enduits selon l'invention (sans polyacide carboxylique et sans catalyseur) en une étape**

**Formulation A'**

Dans un flacon en verre à fermeture hermétique, 2,873 mL de TMOS sont ajoutés à un volume de 22,13 mL d'eau ultra pure. La formule est agitée à température ambiante (20-22°C) au repère 4 de la plaque à agitateurs multiples IKA WERKE RO10 power (environ 500 tr/min).
Viscosité dynamique : 6,8 cP (mPa.s)
Le dépôt de cette formule sur textile indique une masse surfacique de 29 g/m$^2$.

**Formulation B'**

Dans un flacon en verre à fermeture hermétique, 1,438 mL de TMOS et 1,415 mL de MTM sont ajoutés à un volume de 22,15 mL d'eau ultra pure. La formule est agitée à température ambiante (20-22°C) au repère 4 de la plaque à agitateurs multiples IKA WERKE RO10 power (environ 500 tr/min).
Viscosité dynamique : 2,3 cP (mPa.s)
Le dépôt de cette formule sur textile indique une masse surfacique de 27 g/m$^2$.

**Formulation C'**

Dans un flacon en verre à fermeture hermétique, 2,012 mL de TMOS et 0,848 mL de MTM sont ajoutés à un volume de 22,14 mL d'eau ultra pure. La formule est agitée à température ambiante (20-22°C) au repère 4 de la plaque à agitateurs multiples IKA WERKE RO10 power (environ 500 tr/min).
Viscosité dynamique : 2,4 cP (mPa.s)
Le dépôt de cette formule sur textile indique une masse surfacique de 27 g/m$^2$.

**Formulation D'**

Dans un flacon en verre à fermeture hermétique, 1,896 mL de TMOS et 0,085 mL d'APTES sont ajoutés à un mélange de 11,51 mL d'eau ultra pure et 11,51 mL d'éthanol. La formule est agitée à température ambiante (20-22°C) au repère 4 de la plaque à agitateurs multiples IKA WERKE RO10 power (environ 500 tr/min).
Viscosité dynamique : 3,4 cP (mPa.s)
Le dépôt de cette formule sur textile indique une masse surfacique de 27 g/m$^2$.

**Formulation E'**

Dans un flacon en verre à fermeture hermétique, 1,836 mL de TMOS et 0,170 mL d'APTES sont ajoutés à un mélange de 11,50 mL d'eau ultra pure et 11,50 mL d'éthanol. La formule est agitée à température ambiante (20-22°C) au repère 4 de la plaque à agitateurs multiples IKA WERKE RO10 power (environ 500 tr/min).
Viscosité dynamique : 3,8 cP (mPa.s)
Le dépôt de cette formule sur textile indique une masse surfacique de 24 g/m$^2$.

**Formulation F'**

Dans un flacon en verre à fermeture hermétique, 2,516 mL de TMOS et 0,175 mL de 3FTMOS sont ajoutés à un mélange de 19,40 mL d'eau ultra pure et 2,91 mL d'acétonitrile. La formule est agitée à température ambiante (20-22°C) au repère 4 de la plaque à agitateurs multiples IKA WERKE RO10 power (environ 500 tr/min).
Viscosité dynamique : 2,7 cP (mPa.s)
Le dépôt de cette formule sur textile indique une masse surfacique de 23 g/m$^2$.

**Formulation G'**

Dans un flacon en verre à fermeture hermétique, 2,499 mL de TMOS et 0,348 mL de 13FTEOS sont ajoutés à un mélange de 19,26 mL d'eau ultra pure et 2,89 mL d'acétonitrile. La formule est agitée à température ambiante (20-22°C) au repère 4 de la plaque à agitateurs multiples IKA WERKE RO10 power (environ 500 tr/min).
Viscosité dynamique : 3,6 cP (mPa.s)
Le dépôt de cette formule sur textile indique une masse surfacique de 21 g/m$^2$.

**Formulation H'**

Dans un flacon en verre à fermeture hermétique, 2,481 mL de TMOS et 0,524 mL de 17FTEOS sont ajoutés à un mélange de 19,13 mL d'eau ultra pure et 2,87 mL d'acétonitrile. La formule est agitée à température ambiante (20-22°C) au repère 4 de la plaque à agitateurs multiples IKA WERKE RO10 power (environ 500 tr/min).
Viscosité dynamique : 3,7 cP (mPa.s)
Le dépôt de cette formule sur textile indique une masse surfacique de 23 g/m$^2$.

**Formulation I'**

Dans un flacon en verre à fermeture hermétique, 11,49 mL d'eau ultra pure et 11,49 mL d'éthanol sont mélangés. Puis 1,796 mL de TMOS, 0,129 mL de 3FTMOS et 0,095 mL d'APTES sont ajoutés au mélange de solvants. La formule est agitée à température ambiante (20-22°C) au repère 4 de la plaque à agitateurs multiples IKA WERKE RO10 power (environ 500 tr/min).
Viscosité dynamique : 3,4 cP (mPa.s)
Le dépôt de cette formule sur textile indique une masse surfacique de 21 g/m$^2$.

**Formulation J'**

Dans un flacon en verre à fermeture hermétique, 11,43 mL d'eau ultra pure et 11,43 mL d'éthanol sont mélangés. Puis 1,787 mL de TMOS, 0,257 mL de 13FTEOS et 0,094 mL d'APTES sont ajoutés au mélange de solvants. La formule est agitée à température ambiante (20-22°C) au repère 4 de la plaque à agitateurs multiples IKA WERKE RO10 power (environ 500 tr/min).
Viscosité dynamique : 3,5 cP (mPa.s)
Le dépôt de cette formule sur textile indique une masse surfacique de 21 g/m$^2$.

**Formulation K'**

Dans un flacon en verre à fermeture hermétique, 11,41 mL d'eau ultra pure et 11,41 mL d'éthanol sont mélangés. Puis 1,784 mL de TMOS, 0,294 mL de 17FTEOS et 0,094 mL d'APTES sont ajoutés au mélange de solvants. La formule est agitée à température ambiante (20-22°C) au repère 4 de la plaque à agitateurs multiples IKA WERKE RO10 power (environ 500 tr/min).
Viscosité dynamique : 3,9 cP (mPa.s)
Le dépôt de cette formule sur textile indique une masse surfacique de 22 g/m$^2$.

**Formulation L' (L'①, L'② et L'③)**

Dans un flacon en verre à fermeture hermétique, 4,900 mL de TMOS et 0,683 mL de PhTMOS sont ajoutés à un volume de 40,88 mL d'eau ultra pure (formule L'①) ou à un mélange de 20,44 mL d'eau ultra pure et 20,44 mL d'éthanol (formule L'②). Dans un flacon en verre à fermeture hermétique, 57,26 mL de TMOS et 13,01 mL de PhTMOS sont ajoutés à un volume de 129,72 mL d'eau ultra pure (formule L'③) Les formules sont agitées à température ambiante (20-22°C) au repère 4 de la plaque à agitateurs multiples IKA WERKE RO10 power (environ 500 tr/min).
Le dépôt des formules L'① et L'② sur textile indique respectivement une masse surfacique de 16 et 17 g/m$^2$. Le dépôt de la formule L'③ sur un feutre en Nomex® indique une masse surfacique de 510 g/m$^2$.

**Formulation M'**

Dans un flacon en verre à fermeture hermétique, 1,000 mL de TMOS et 0,418 mL de PhTMOS sont ajoutés à un volume de 10,010 mL d'eau ultra pure. La formule est agitée à température ambiante (20-22°C) au repère 4 de la plaque à agitateurs multiples IKA WERKE RO10 power (environ 500 tr/min).
Viscosité dynamique : 1,7 cP (mPa.s)
Le dépôt de cette formule sur textile indique une masse surfacique de 18 g/m$^2$.

**Formulation N'**

Dans un flacon en verre à fermeture hermétique, 4,000 mL de TMOS et 0,660 mL de GPTMS sont ajoutés à un volume de 33,37 mL d'eau ultra pure. La formule est agitée à température ambiante (20-22°C) au repère 4 de la plaque à agitateurs multiples IKA WERKE RO10 power (environ 500 tr/min).
Viscosité dynamique : 4,7 cP (mPa.s)
Le dépôt de cette formule sur textile indique une masse surfacique de 13 g/m$^2$.

**Formulation O'**

Dans un flacon en verre à fermeture hermétique, 2,277 mL de TMOS, 0,367 mL de PhTMOS et 0,434 mL de GPTMOS sont ajoutés à un volume de 21,93 mL d'eau ultra pure. La formule est agitée à température ambiante (20-22°C) au repère 4 de la plaque à agitateurs multiples IKA WERKE RO10 power (environ 500 tr/min).
Viscosité dynamique : 1,9 cP (mPa.s)
Le dépôt de cette formule sur textile indique une masse surfacique de 17 g/m$^2$.

**Formulation P'**

Dans un flacon en verre à fermeture hermétique, 2,158 mL de TMOS, 0,552 mL de 17FTEOS et 0,396 mL de GPTMOS sont ajoutés à un mélange de 19,04 mL d'eau ultra pure et 2,86 mL d'acétonitrile. La formule est agitée à température ambiante (20-22°C) au repère 4 de la plaque à agitateurs multiples IKA WERKE RO10 power (environ 500 tr/min).

Viscosité dynamique : 3,9 cP (mPa.s)

Le dépôt de cette formule sur textile indique une masse surfacique de 15 g/m$^2$.

**III. Préparation de tissus enduits selon l'invention (sans polyacide carboxylique et sans catalyseur) en deux étapes**

**Formulation H"**

Dans un premier flacon en verre à fermeture hermétique, 2,00 mL de TPOZ sont dilués dans 23,0 mL d'éthanol (formule H"1). Dans un second flacon en verre à fermeture hermétique, 19,13 mL d'eau ultra pure et 2,87 mL d'acétonitrile sont mélangés. Puis 2,481 mL de TMOS et 0,524 mL de 17FTEOS sont ajoutés au mélange de solvants (formule H"2). Les formules sont agitées à température ambiante (20-22°C) au repère 4 de la plaque à agitateurs multiples IKA WERKE RO10 power (environ 500 tr/min).

Viscosité dynamique :

- H"1 : 1,5 cP (mPa.s)
- H"2 : 2,6 cP (mPa.s)

Les dépôts successifs des formules H"1 et H"2 sur textile indiquent une masse surfacique de 14 g/m$^2$.

**Formulation L"**

Dans un premier flacon en verre à fermeture hermétique, 11,28 mL de TPOZ sont dilués dans 96,82 mL d'éthanol (formule L"1). Dans un second flacon en verre à fermeture hermétique, 16,415 mL de TMOS et 2,290 mL de PhTMOS sont ajoutés à un volume de 137,0 mL d'eau ultra pure (formule L"2). Les formules sont agitées à température ambiante (26-27°C) à environ 3 graduations de l'agitateur magnétique chauffant BIBBY HG 1202 (environ 400 tr/min).

Les dépôts séquencés des formules L"1 et L"2 (= L") sur textile indiquent une masse surfacique de 10 g/m$^2$.

**Formulation M"**

Dans un premier flacon en verre à fermeture hermétique, 2,76 mL de TPOZ sont dilués dans 22,2 mL d'éthanol (formule M"1). Dans un second flacon en verre à fermeture hermétique, 8,55 mL de TMOS et 3,67 mL de PhTMOS sont mélangés à 87,8 mL d'eau ultra pure (formule M"2). Les formules sont agitées à température ambiante (20-22°C) au repère 4 de la plaque à agitateurs multiples IKA WERKE RO10 power (environ 500 tr/min).

Viscosité dynamique :

- M"1 : 1,5 cP (mPa.s)
- M"2 : 1,9 cP (mPa.s)

Les dépôts successifs des formules M" 1 et M"2 sur textile indiquent une masse surfacique de 20 g/m$^2$. Les dépôts séquencés des formules M"1 et M"2 sur textile indiquent une masse surfacique de 17 g/m$^2$.

Le tableau 1 ci-dessous résume les masses surfaciques obtenues pour les différentes formulations. Rappelons que :

- La stratégie I d'accrochage selon FR 2984343 A1 est réalisée avec l'ajout de l'acide succinique et de l'hypophosphite de sodium ;
- La stratégie II d'accrochage en une étape selon l'invention est l'accrochage direct avec les précurseurs silicés utilisés ;

  - La stratégie III d'accrochage en deux étapes selon l'invention est l'accrochage via un alcoxyde de Zr.

**Tableau 1**

| Précurseurs sol-gel | Formule suivant la stratégie 1 | Dépôt de sol-gel (g/m$^2$) | Formule suivant la stratégie II | Dépôt de sol-gel (g/m$^2$) | Formule suivant la stratégie III | Dépôt de sol-gel (g/m$^2$) |
|---|---|---|---|---|---|---|
| TMOS | A | 24 | A' | 29 | - | - |
| TMOS/MTM | B | 18 | B' | 27 | - | - |
| TMOS/MTM | C | 18 | C' | 27 | - | - |
| TMOS/APTES | D | 31 | D' | 27 | - | - |
| TMOS/APTES | E | 25 | E' | 24 | - | - |
| TMOS/3FTMOS | F | 15 | F' | 23 | - | - |
| TMOS/13FTEOS | G | 16 | G' | 21 | - | - |
| TMOS/17FTEOS | H | 19 | H' | 23 | H" | 14 |
| TMOS/APTES/3FTMOS | I | 23 | I' | 21 | - | - |
| TMOS/APTES/13FTEOS | J | 23 | J' | 21 | - | - |
| TMOS/APTES/17FTEOS | K | 21 | K' | 22 | - | |
| TMOS/PhTMOS | - | - | L'① | 16 | L" = L"① +L"② | 10 |
| TMOS/PhTMOS | - | - | L'② | 17 | - | - |
| TMOS/PhTMOS | - | - | M' | 18 | M"① | 20 |
| TMOS/PhTMOS | - | - | - | - | M"② | 17 |
| TMOS/GPTMOS | - | - | N' | 13 | - | - |
| TMOS/GPTMOS/PhTMOS | - | - | O' | 17 | - | - |
| TMOS/GPTMOS/17FTEOS | - | - | P' | 15 | - | - |

## Exemple 2 : Exposition aux polluants

Les tissus imprégnés de chaque formulation sol-gel ont été exposés à des mélanges gazeux contenant du salicylate de méthyle ou du toluène pour tester l'efficacité du piégeage en fonction des propriétés de porosité des matériaux sol-gel et de la polarité intrapore. Les courbes de perçage sous flux gazeux ont été établies pour chaque polluant.

### 2.1 Matériels et méthodes

### Perméabilité des tissus aux gaz

Afin de tester la perméabilité des tissus aux gaz, un banc de test a été installé au laboratoire. Pour cela, un poromètre « Porometer 3G, sample holder 37 mm » de Quantachrome a été utilisé. Ce poromètre permet de tester un tissu de diamètre 37 mm (découpe réalisée à l'emporte-pièce). L'étanchéité est assurée par des joints toriques. Ainsi, le flux de gaz passe à travers l'ensemble du tissu testé.

Le banc de test des tissus est constitué de deux vannes 4 voies en amont et en aval du porte-échantillon permettant la mesure des flux de gaz en amont et en aval du porte-échantillon. Les tests ont montré qu'il n'y a pas (ou peu) de perte de charge en présence du tissu testé. Les mesures des teneurs en polluant sont effectuées dans le flux de gaz en amont et en aval du porte-échantillon à l'aide d'un détecteur PID (PhotoIonization Détecter : détecteur à photoionisation) afin d'obtenir la courbe de perçage du polluant. La perméabilité des tissus est testée à l'aide de deux polluants : le toluène et/ou le salicylate de méthyle. Chaque polluant dispose de conditions d'exposition qui lui sont propres. Ces conditions sont décrites ci-après.

■ **Test de perméabilité au toluène** : Pour les tests d'exposition au toluène, ce polluant est obtenu à partir d'une bouteille calibrée à 100 ppm (le débitmètre utilisé est dans la gamme : 0-100 mL/min) puis dilué dans l'azote sec (le débitmètre utilisé est dans la gamme : 0-1 L/min). Le flux de gaz dilué est mis en contact avec le tissu testé. Une teneur en toluène de 3-4 ppm est classiquement utilisée pour les tests de perméabilité.

- **Test de perméabilité au salicylate de méthyle** : Pour les tests d'exposition au salicylate de méthyle, les vapeurs de ce polluant sont générées par bullage d'azote sec (le débitmètre utilisé est dans la gamme : 0-1 L/min). Le flux de gaz enrichi en salicylate de méthyle est mis en contact avec le tissu testé. Un thermostat/cryostat pour réguler la température du bulleur contenant le salicylate de méthyle (serpentin) est utilisé afin d'assurer la reproductibilité des tests d'exposition. Le bulleur contenant le salicylate de méthyle est ainsi régulé à 20°C. En utilisant un débit d'azote sec de 300 mL/min, une teneur initiale de 55-60 ppm en salicylate de méthyle est obtenue.

**Méthodes d'exploitation des données de perméabilité au salicylate de méthyle**

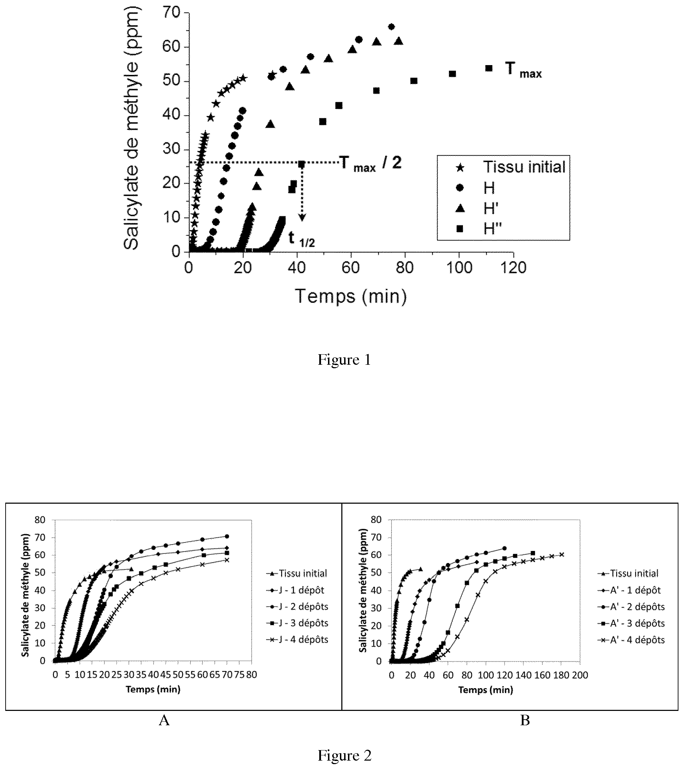

Les tests de perméabilité au salicylate de méthyle consistent à mesurer la teneur en salicylate (en ppm) en fonction du temps. Ce tracé s'appelle une courbe de perçage dont la forme en « S » est plus ou moins marquée. La comparaison des courbes de perçage du salicylate de méthyle normalisées avec un dépôt de 20 g/m² pour le tissu initial, la formule H (stratégie I), la formule H' (stratégie II) et la formule H" (stratégie III) est présentée à la Figure 1. Les comparaisons des courbes de perçage du salicylate de méthyle normalisées avec des dépôts successifs de 20 g/m² pour le tissu initial et la formule J (stratégie I) et pour le tissu initial et la formule A' sont présentées aux Figures 2A et 2B respectivement.

Les courbes de perçage obtenues ont été exploitées par deux méthodes : décomposition de la courbe de perçage et modélisation de la courbe de perçage. Les deux méthodes sont détaillées ci-dessous.

- **Méthode 1 : Décomposition de la courbe de perçage**

La première méthode pour évaluer la filtration consiste à décomposer la courbe de perçage et à analyser les durées de piégeage total. Les durées de piégeage total sont déterminées pour une teneur en salicylate de méthyle à 0 ppm (t @ 0 ppm), une teneur en salicylate de méthyle inférieure à 1 ppm (t < 1 ppm), inférieure à 5 ppm (t < 5 ppm) et inférieure à 20 ppm (t < 20 ppm). Ces durées de piégeage total constituent les temps caractéristiques de la méthode de décomposition.

- **Méthode 2 : Modélisation de la courbe de perçage**

La deuxième méthode pour évaluer la filtration consiste à modéliser la courbe de perçage par une fonction sigmoïde suivant le modèle de Hill décrit ci-dessous. Ce modèle a été retenu car, par définition, il permet une modélisation à partir du point (0,0) c'est-à-dire : une teneur en salicylate de 0 ppm à t = 0 min. Ce modèle, issu de la catalyse enzymatique, modélise des données strictement positives suivant une sigmoïde (courbe en forme de « S ») ce qui correspond bien aux courbes de perçage obtenues par exposition des tissus imprégnés de sol-gel au salicylate de méthyle.

Le temps caractéristique de la méthode de modélisation de la courbe de perçage est donc : $t_{1/2}$. De plus, à partir des paramètres du modèle, la pente de la courbe peut être calculée. Pour cela, deux points sont nécessaires : A $(t_A ; T_A)$ et B $(t_B ; T_B)$. Le calcul des coordonnées et de la pente sont rappelés dans le tableau ci-dessous.

- **Comparaison des données** : **normalisation des temps caractéristiques**

Les masses surfaciques des dépôts de sol-gel varient entre 15 et 30 g/m². Or la comparaison des données n'est possible qu'à masse identique. Ainsi, pour s'affranchir des différences de masses surfaciques, les temps caractéristiques des deux méthodes décrites ci-dessus ont été normalisés à un dépôt moyen de 20 g/m². En pratique, la normalisation est calculée comme suit :

$$|\, t\,(min)\,| = \frac{t_{caractéristique}\,(min)}{Masse\ surfacique\ expérimentale\ (g/m^2)} \; x \; Masse\ surfacique\ de\ 20\ g/m^2$$

De cette manière, les données sont rapportées à poids identique : la comparaison des formules est donc possible.

**2.2 Résultats**

- **Exposition au salicylate de méthyle**

Les résultats des stratégies d'accrochage I, II et III sont reportés dans les tableaux 2, 3 et 4 ci-dessous pour l'efficacité de piégeage du salicylate de méthyle.

**Tableau 2**

| Stratégie | | I | | | | | |
|---|---|---|---|---|---|---|---|
| Temps (min) | | $|t_{@\,0\,ppm}|$ | $|t_{<1\,ppm}|$ | $|t_{<5\,ppm}|$ | $|t_{<20\,ppm}|$ | $|t_{1/2}|$ | Pente (ppm/min) |
| Tissu initial | | 0,0 | 1,0 | 1,5 | 3,0 | 4,2 | 6,4 |
| Formule | A | 0,0 | 5,0 | 8,3 | 14,2 | 16,0 | 2,1 |
| | B | 0,0 | 1,1 | 1,7 | 3,3 | 4,3 | 5,7 |
| | C | 0,0 | 2,2 | 3,9 | 6,1 | 9,1 | 5,6 |
| | D | 0,0 | 4,4 | 6,3 | 8,8 | 13,4 | 4,9 |
| | E | 0,0 | 8,8 | 11,9 | 16,3 | 21,7 | 3,9 |
| | F | 0,0 | 0,6 | 1,6 | 6,1 | 12,9 | 1,8 |
| | G | 0,0 | 0,8 | 3,2 | 10,0 | 15,8 | 1,7 |
| | H | 0,0 | 8,0 | 11,3 | 17,3 | 21,5 | 3,0 |
| | I | 6,1 | 8,7 | 11,3 | 16,5 | 18,9 | 2,1 |
| | J | 2,6 | 4,3 | 6,1 | 9,6 | 12,6 | 5,3 |
| | K | 0,0 | 3,8 | 5,2 | 8,1 | 11,8 | 3,2 |

**Tableau 3**

| Stratégie | | II | | | | | |
|---|---|---|---|---|---|---|---|
| Temps (min) | | $|t_{@\,0\,ppm}|$ | $|t_{<1\,ppm}|$ | $|t_{<5\,ppm}|$ | $|t_{<20\,ppm}|$ | $|t_{1/2}|$ | Pente (ppm/min) |
| Tissu initial | | 0,0 | 1,0 | 1,5 | 3,0 | 4,2 | 6,4 |
| Formule | A' | 21,6 | 23,7 | 27,2 | 34,1 | 37,3 | 2,1 |
| | B' | 2,6 | 4,2 | 5,7 | 9,1 | 11,4 | 2,8 |
| | C' | 14,9 | 17,1 | 20,1 | 26,8 | 30,3 | 2,2 |
| | D' | 17,1 | 18,0 | 21,3 | 27,0 | 30,3 | 2,7 |
| | E' | 13,8 | 15,1 | 17,2 | 21,6 | 24,5 | 3,1 |
| | F' | 20,7 | 21,5 | 23,7 | 28,9 | 31,3 | 2,7 |
| | G' | 20,4 | 21,5 | 23,7 | 31,5 | 35,7 | 2,1 |
| | H' | 17,2 | 18,1 | 20,3 | 25,0 | 28,0 | 3,0 |
| | I' | 20,2 | 21,2 | 24,0 | 31,7 | 35,1 | 2,2 |
| | J' | 11,3 | 15,1 | 17,5 | 23,6 | 26,5 | 2,6 |
| | K' | 8,0 | 10,7 | 13,4 | 17,9 | 20,4 | 3,3 |
| | L'① | 34,0 | 38,6 | 47,3 | 63,5 | 72,9 | 1,4 |
| | L'② | 28,7 | 35,3 | 44,0 | 58,6 | 62,6 | 1,3 |
| | M' | 24,4 | 25,2 | 35,2 | 50,9 | 64,6 | 0,9 |
| | N' | 28,4 | 38,0 | 48,4 | 61,3 | 69,3 | 1,9 |
| | O' | 18,9 | 20,1 | 22,5 | 30,9 | 35,0 | 2,0 |
| | P' | 7,9 | 11,1 | 16,3 | 23,0 | 33,0 | 1,5 |

**Tableau 4**

| Stratégie | | III | | | | | |
|---|---|---|---|---|---|---|---|
| Temps (min) | | $|t_{@\,0\,ppm}|$ | $|t_{<1\,ppm}|$ | $|t_{<5\,ppm}|$ | $|t_{<20\,ppm}|$ | $|t_{1/2}|$ | Pente (ppm/min) |
| Tissu initial | | 0,0 | 1,0 | 1,5 | 3,0 | 4,2 | 6,4 |
| Formule | H" | 26,4 | 29,2 | 32,5 | 38,9 | 41,7 | 3,1 |
| | L" | 45,0 | 56,8 | 102,6 | 133,3 | 151,5 | 1,1 |

Les résultats obtenus en filtration du salicylate de méthyle montrent que l'intégralité des formulations testées suivant la stratégie d'accrochage II selon l'invention présente une meilleure performance de filtration que les formulations préparées suivant la stratégie d'accrochage I selon l'art antérieur à base des mêmes précurseurs sol-gel. Ces résultats démontrent bien que l'incorporation de l'acide polycarboxylique et du catalyseur modifient le sol-gel le rendant inadapté à une application en filtration gaz. Le meilleur résultat de perméabilité au salicylate de méthyle est obtenu avec la formulation L" avec la stratégie III.

Des dépôts successifs ont été testés pour augmenter la masse surfacique du matériau filtrant.

De 1 à 4 dépôts successifs des formules J et A' ont été réalisés ainsi que deux dépôts successifs différents des formules N' et L'O. Ceux-ci ont conduit à des masses surfaciques comprises entre 12 et 47 g/m² pour la formulation J et 11 à 32 g/m² pour A'. Il est à noter que si l'accroche est meilleure avec la formulation J contenant le polyacide carboxylique et le catalyseur (stratégie I), en revanche la présence du polyacide et du catalyseur a pour effet de diminuer fortement la propriété de filtration, comparativement à la formulation A. La masse surfacique est de 36 g/m² pour N' + L'①. Les stratégies d'accrochage I et II sont comparées dans le tableau 5 ci-dessous pour l'efficacité de piégeage du salicylate de méthyle.

**Tableau 5**

| Dépôts successifs avec la stratégie I | | | | | Dépôts successifs avec la stratégie II | | | | |
|---|---|---|---|---|---|---|---|---|---|
| Formule | Nombre de dépôt | $t_{@\,0ppm}$ (min) | $t_{1/2}$ (min) | Pente (ppm/min) | Formule | Nombre de dépôt | $t_{@\,0ppm}$ (min) | $t_{1/2}$ (min) | Pente (ppm/min) |
| Tissu initial | **0** | 0,0 | 4,2 | 6,4 | Tissu initial | **0** | 0,0 | 4,2 | 6,4 |
| J | **1** | 5,2 | 11,8 | 5,1 | A' | **1** | 8,0 | 21,1 | 2,6 |
| | **2** | 7,3 | 18,5 | 4,2 | | **2** | 14,3 | 38,2 | 2,1 |
| | **3** | 5,0 | 18,9 | 2,8 | | **3** | 24,0 | 69,3 | 1,4 |
| | **4** | 7,3 | 24,6 | 2,0 | | **4** | 32,3 | 83,9 | 1,1 |
| | | | | | N' + L'❶ | **1+1** | 44,0 | 81,2 | 0,8 |

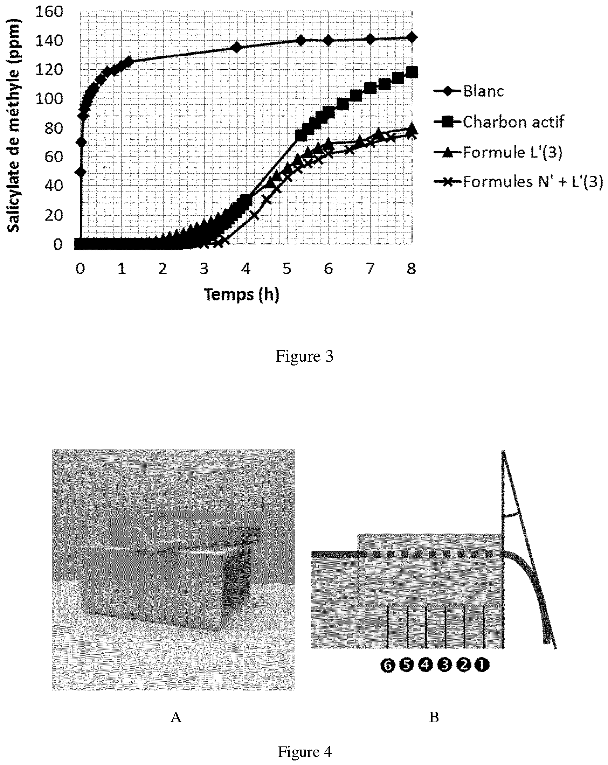

Un dépôt de la formule L'③ et deux dépôts successifs des formules N' + L'③ ont été réalisés sur un feutre en Nomex®. Ces dépôts ont conduit à des masses surfaciques de 510 (formule N' seule) et 588 g/m² (N' : 173 g/m² + L'③ : 415 g/m²) respectivement. Ces étoffes imprégnées de sol-gel ont été comparées à une couche filtrante employant une technologie basée sur des billes de charbon actif, représentant l'art de la technique et présentant une masse surfacique de 150 g/m² de charbon actif et une surface spécifique de 1770 m²/g. Les expositions à une concentration de 140 ppm en salicylate de méthyle sur 8h ont conduit aux courbes de perçage données en Figure 3.

Les résultats montrent que sans charbon actif, les formulations à base de sol-gel seules permettent de filtrer une forte concentration en salicylate de méthyle de manière similaire à l'art antérieur. Plus particulièrement, cette capacité de piégeage est même meilleure dans le cas des dépôts successifs de N' et L'③. En effet, la durée de piégeage t @ 0 ppm est de 2,3h pour le charbon actif alors qu'elle est de 3,0 h pour les dépôts successifs de N' et L'③. La pente de la courbe de perçage est également meilleure puisque des valeurs de 22 et 32 ppm/h sont obtenues pour la formule L'③ et N'+L'③ alors que l'art antérieur présente une pente de 35 ppm/h.

- **Exposition au toluène**

Les stratégies d'accrochage I, II et III sont comparées dans les tableaux 6, 7 et 8 ci-dessous pour l'efficacité de piégeage du toluène.

**Tableau 6**

| Stratégie | | I | | | |
|---|---|---|---|---|---|
| Temps (min) | | $|t_{@\ 0\ ppm}|$ | $|t_{<1\ ppm}|$ | $|t_{<2\ ppm}|$ | $|t_{<3\ ppm}|$ |
| Tissu initial | | 0,0 | 0,2 | 0,3 | 0,4 |
| Formule | A | 0,0 | 0,4 | 1,7 | 25,0 |
| | B | 0,0 | 0,2 | 0,2 | 0,3 |
| | C | 0,0 | 0,3 | 0,4 | 11,7 |
| | D | 0,0 | 0,7 | 0,9 | 1,7 |
| | E | 0,2 | 0,5 | 2,1 | 15,0 |
| | F | 0,0 | 0,2 | 34,2 | 88,3 |
| | G | 0,0 | 0,2 | 27,5 | 70,8 |
| | H | 0,2 | 0,4 | 16,7 | 68,3 |
| | 1 | 0,0 | 0,2 | 0,5 | 20,8 |
| | J | 0,0 | 0,3 | 5,0 | 51,7 |
| | K | 0,2 | 0,4 | 13,3 | 48,3 |

**Tableau 7**

| Stratégie | | II | | | |
|---|---|---|---|---|---|
| Temps (min) | | $|t_{@\ 0\ ppm}|$ | $|t_{<1\ ppm}|$ | $|t_{<2\ ppm}|$ | $|t_{<3\ ppm}|$ |
| Tissu initial | | 0,0 | 0,2 | 0,3 | 0,4 |
| Formule | A' | 0,1 | 0,3 | 22,8 | 49,7 |
| | B' | 0,0 | 0,2 | 0,5 | 12,4 |
| | C' | 0,1 | 0,6 | 8,3 | 20,7 |
| | D' | 0,2 | 0,4 | 0,5 | 3,0 |
| | E' | 0,4 | 1,7 | 4,0 | 11,0 |
| | F' | 0,1 | 0,5 | 14,5 | 35,9 |
| | G' | 0,2 | 0,9 | 23,4 | 46,9 |
| | H' | 0,2 | 3,4 | 21,4 | 55,2 |
| | I' | 0,5 | 5,9 | 22,1 | 77,2 |
| | J' | 0,2 | 0,4 | 0,5 | 1,7 |
| | K' | 0,8 | 4,4 | 8,3 | 15,9 |
| | L'① | 4,5 | 20,2 | 38,4 | 85,6 |
| | L'② | 0,7 | 20,1 | 43,1 | 94,8 |

(suite)

| Stratégie | | II | | | |
|---|---|---|---|---|---|
| Temps (min) | | $|t_{@\ 0\ ppm}|$ | $|t_{<1\ ppm}|$ | $|t_{<\ 2\ ppm}|$ | $|t_{<3\ ppm}|$ |
| | M' | 0,0 | 4,0 | 11,1 | 26,6 |
| | N' | 0,0 | 5,7 | 12,0 | 23,9 |

**Tableau 8**

| Stratégie | | III | | | |
|---|---|---|---|---|---|
| Temps (min) | | $|t_{@\ 0\ ppm}|$ | $|t_{<1\ ppm}|$ | $|t_{<\ 2\ ppm}|$ | $|t_{<3\ ppm}|$ |
| Tissu initial | | 0,0 | 0,2 | 0,3 | 0,4 |
| Formule | H" | 0,3 | 0,4 | 0,8 | 28,0 |
| | L" | 0,0 | 4,0 | 8,2 | 96,0 |

Les résultats obtenus en perméabilité au toluène sont plus contrastés que ceux obtenus en perméabilité au salicylate de méthyle. En effet, les résultats indiquent que la stratégie d'accrochage utilisée a une influence sur les performances de filtration à l'exception des formules G et H où les résultats sont équivalents pour les deux stratégies I et II. Une amélioration des performances de filtration du toluène est observée avec la stratégie d'accrochage II dans 6 tests sur 9. Les meilleurs résultats de perméabilité au toluène sont obtenus avec la formulation L'O, qui donnait également les meilleures performances pour le salicylate de méthyle.

Des dépôts successifs ont été testés pour augmenter la masse surfacique du matériau filtrant.

De 1 à 4 dépôts successifs des formules J et A' ont été réalisés. Ceux-ci ont conduit à des masses surfaciques comprises entre 12 et 47 g/m² pour la formulation J et 11 à 32 g/m² pour A'. Les stratégies d'accrochage I et II sont comparées dans le tableau 9 ci-dessous pour l'efficacité de piégeage du toluène.

**Tableau 9**

| | Dépôts successifs avec la stratégie I | | | | Dépôts successifs avec la stratégie II | | | |
|---|---|---|---|---|---|---|---|---|
| Formule | Nombre de dépôt | $|t_{@\ 0\ ppm}|$ | $t_{<2\ ppm}$ | $t_{<3\ ppm}$ | Formule | Nombre de dépôt | $|t_{@\ 0\ ppm}|$ | $t_{<2\ ppm}$ | $t_{<3\ ppm}$ |
| Tissu initial | 0 | 0,0 | 0,3 | 0,4 | Tissu initial | 0 | 0,0 | 0,3 | 0,4 |
| J | 1 | 0,0 | 0,5 | 15,0 | A' | 1 | 0,3 | 1,0 | 2,1 |
| | 2 | 0,0 | 10,3 | 76,3 | | 2 | 0,3 | 1,6 | 15,8 |
| | 3 | 0,0 | 56,0 | 135,0 | | 3 | 0,2 | 15,8 | 28,7 |
| | 4 | 0,0 | 68,0 | 182,0 | | 4 | 0,2 | 29,5 | 46,0 |

On observe les mêmes résultats qu'avec l'exposition au salicylate de méthyle. Malgré une masse surfacique plus élevée pour la formulation J que pour A', la présence de polyacide carboxylique et de catalyseur a pour effet de diminuer la propriété de filtration de media J.

**Exemple 3 : Polarité et porosité des matériaux sol-gel**

La porosité des matériaux sol-gel a été déterminée à partir de l'établissement d'isothermes d'adsorption d'azote (surface spécifique, volume poreux, distribution de taille de pores). La polarité intrapore est révélée par la capacité du matériau à piéger de manière plus efficace le salicylate de méthyle comparativement au toluène.

**3.1 Matériels et méthodes**

L'adsorption d'azote consiste en la physisorption d'azote à la surface d'un solide : il s'agit d'un phénomène réversible (adsorption/désorption). L'adsorption d'azote une technique volumétrique : un volume de gaz de température et de pression connues est envoyé sur l'échantillon préalablement dégazé et maintenu à la température de l'azote liquide. Une isotherme d'adsorption correspondant au volume de gaz adsorbé en fonction de la pression partielle d'azote est établie. L'interprétation des isothermes d'adsorption est réalisée en s'appuyant sur divers modèles analytiques : modèle de Brunauer, Emmett et Teller (BET) qui est un modèle d'adsorption d'une couche monomoléculaire de molécules d'azote dans les pores, et modèle basée sur la théorie de la fonctionnelle de densité qui reproduit avec l'aide de méthodes de Monte Carlo l'isotherme d'adsorption pour des pores de taille donnée. Ces analyses permettent d'obtenir trois informations : la surface spécifique d'adsorption, le volume poreux et la distribution de tailles de pores. Les analyses ont été réalisées avec l'analyseur de porosité « AUTOSORB-1 » de Quantachrome.

### 3.2 Résultats

Le tableau 10 ci-dessous résume la polarité et la porosité des matériaux sol-gel monolithiques obtenues à partir de formulation de l'exemple 1 par adsorption d'azote (surface spécifique, volume poreux, distribution de taille de pores).

**Tableau 10**

| Formule | Surface spécifique (m²/g) | | Volume poreux (cm³/g) | Distribution de taille de pores micro-, méso-, macropores (%) | | |
|---|---|---|---|---|---|---|
| | $S_{BET}$ | $S_{DFT}$ | | <20 Å | 20-500 Å | >500 Å |
| A | 472±30 | 316±20 | 0,310 | 0 | 100 | 0 |
| G | 290±30 | 200±20 | 0,14 | 0 | 100 | 0 |
| I | 81±30 | 62±20 | 0,038 | 8 | 92 | 0 |
| A' | 760±30 | 711±20 | 0,405 | 43 | 57 | 0 |
| B' | 735±30 | 581±20 | 0,565 | 5 | 95 | 0 |
| C' | 865±30 | 640±20 | 0,504 | 0 | 99 | 1 |
| D' | 422±30 | 399±20 | 0,753 | 0 | 100 | 0 |
| E' | 340±30 | 346±20 | 0,690 | 0 | 100 | 0 |
| F' | 877±30 | 820±20 | 0,475 | 59 | 41 | 0 |
| G' | 743±30 | 755±20 | 0,376 | 48 | 52 | 0 |
| I' | 546±30 | 459±20 | 0,694 | 8 | 92 | 0 |
| J' | 366±30 | 371±20 | 0,751 | 0 | 100 | 0 |
| K' | 387±30 | 364±20 | 0,765 | 0 | 100 | 0 |
| L'① | 545±30 | 644±20 | 0,257 | 74 | 26 | 0 |
| N' | 332±30 | 291±20 | 0,163 | 50 | 50 | 0 |

### Exemple 4 : Propriétés des tissus imprégnés

#### ▪ Souplesse

La souplesse des tissus imprégnés des formulations sol-gel a été évaluée avec l'outil de mesure de souplesse représenté à la Figure 4A. Cet outil 1 est constitué de deux parties, une partie inférieure 2 servant de support pour le tissu T et un partie supérieure 3 qui s'emboite sur la partie inférieure pour bloquer le tissu T. La Figure 4B montre le schéma de principe pour la mesure. Pour faire une mesure 5 cm de tissu sont positionnés « dans le vide », c'est-à-dire à l'extérieur de l'outil de mesure, une photo est prise de profil, puis, sur la photo de profil, l'angle $\alpha$ formé entre le tissu et la verticale est mesuré à l'aide d'un rapporteur pour évaluer le tombant du tissu.

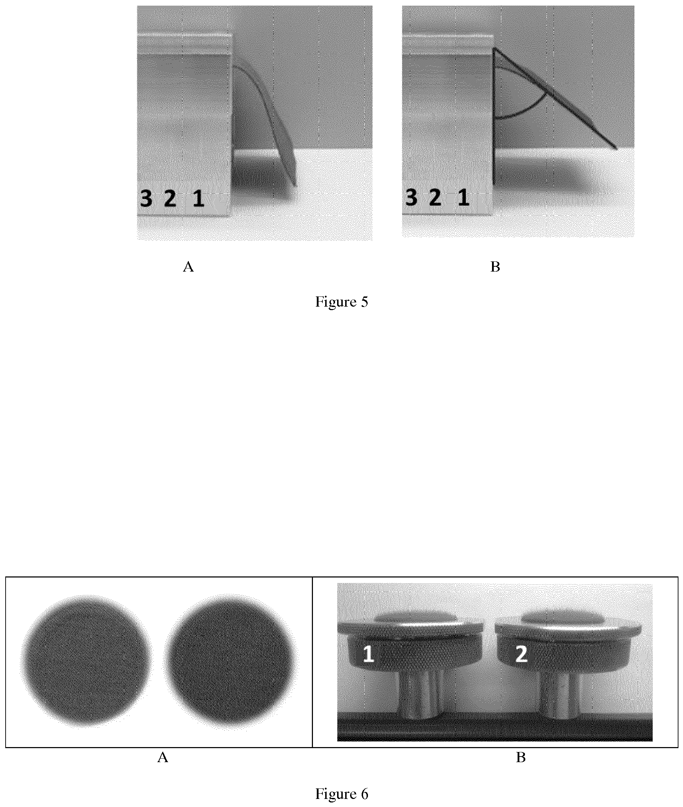

Cet outil permet une comparaison des échantillons avec une référence (tissu sans sol-gel) comme le montre les photos représentées à la figure 5.

Le tableau 11 ci-dessous résume les mesures de souplesse avant/après dépôt de sol-gel.

# EP 3 526 391 B1

**Tableau 11**

| Stratégie d'accroche | $\alpha$ (Tissu initial) | (Tissu + préparation) | $\alpha$ (Tissu + sol-gel) |
|---|---|---|---|
| I | 18° | N/A | 37° (Tissu + Formule H) |
| II | 18° | N/A | 38° Tissu + Formule H' |
| III | 18° | 23° Tissu + Dépôt de H"$_1$ | 23° Tissu + Formule H" (Dépôts de H"$_1$ et H"$_2$) |

- **Perméabilité à l'air**

La notion de respirabilité est liée à la perméabilité à l'air. Les mesures de perméabilité à l'air ont été réalisées selon la norme ISO9237:1995 sous 100 Pa. Le tableau 12 ci-dessous résume les données pour les tissus initiaux ainsi que les tissus imprégnés de la formulation H avec les diverses stratégies d'accrochage.

**Tableau 12**

| Stratégie d'accroche | Formule | Test | Perméabilité à l'air (L/m$^2$.s) | | | | Moyenne (L/m$^2$.s) | Max-min | CV* (%) |
|---|---|---|---|---|---|---|---|---|---|
| | | | Mesure 1 | Mesure 2 | Mesure 3 | Mesure 4 | | | |
| Tissu initial | - | | 128 | 142 | 147 | 139 | **139** | 19 | 5,0 |
| Stratégie I | H | A | 113 | 110 | 118 | 120 | **115** | 10 | 4,0 |
| | H | B | 118 | 138 | 138 | N/A | **131** | 20 | 8,8 |
| Stratégie II | H' | C | 206 | 208 | 211 | 204 | **207** | 7 | 1,4 |
| | H' | D | 212 | 201 | 206 | 205 | **206** | 11 | 2,2 |
| Stratégie III | H" | E | 162 | 168 | 165 | 158 | **163** | 10 | 2,6 |
| | H" | F | 149 | 170 | 169 | 182 | **168** | 33 | 4,5 |
| * Le CV (coefficient de variation) est calculé comme suit : CV (%) = Ecart-type / Moyenne x 100. | | | | | | | | | |

On remarquera que la perméabilité à l'air des tissus imprégnés de formulation H (stratégie I) accuse une légère perte. En revanche, de façon remarquable et reproductible, les valeurs de perméabilité des tissus imprégnés des formulations H' (stratégie II) et H" (stratégie III) sont plus élevées que celle du tissu initial. Ce phénomène très reproductible a été interprété comme un gainage des fibres qui lisse parfaitement ces dernières en réduisant les aspérités inter-fibres qui pourraient réduire la vitesse de pénétration de l'air. Cette augmentation de perméabilité n'affecte pas les propriétés de filtration (H<H'<H").

- **Tenue aux lavages**

Les tissus imprégnés des formules H, H' et H" ont été évalués pour leurs tenues aux lavages à 60°C avec Tumbler intermédiaire suivant la norme ISO 6330:2012.

- **Aspect visuel**

Le dépôt de sol-gel ne change pas l'aspect visuel du tissu initial. De même, la succession de lavages ne modifie pas l'aspect visuel du tissu.

- **Hydrophobie**

Les propriétés hydrophobes des tissus imprégnés des formulations H (stratégie I), H' (stratégie II) et H" (stratégie III) ont été déterminées par mesures d'angle de contact avec le goniomètre « OCA 15EC » de DataPhysics et le logiciel « SCA20 » en mode dynamique avec l'acquisition de 4 mesures par seconde pendant 1 min afin de déterminer la stabilité de la goutte d'eau (10$\mu$L) sur le tissu. Les données sont présentées comme suit : avant lavages / après 1 - 5 - 10 - 25 lavages. Le tableau 13 ci-dessous résume les angles de contact moyen sur 1 min accompagné des photos prises en fin de mesure en mode dynamique.

**Tableau 13**

| Tissu | Angle de contact moyen sur 1 min (°) / CV (%) | | | | |
|---|---|---|---|---|---|
| | Avant lavages | 1 lavage | 5 lavages | 10 lavages | 25 lavages |
| **H** | 147° / 0,24% | 142° / 0,35% | De 133 à 82° | - | - |
| **H'** | 145° / 0,11% | 142° / 0,27% | De 127 à 0° | - | - |
| **P'** | 145° / 0,57% | 141 / 0,49% | 130 / 0,06% | 128 / 1,68% | De 113 à 91° |
| **H"** | 131 ° / 0,30% | 134° / 0,78% | 134° / 0,56% | De 122 à 88° | - |

Sur la base des propriétés hydrophobes, la stratégie d'accrochage suivant l'invention sans acide polycarboxylique et sans catalyseur est meilleure que la stratégie d'accrochage selon l'art antérieur puisque l'angle de contact reste stable à 10 lavages contre seulement 1 lavage pour l'art antérieur.

■ **Analyse dispersive en énergie (MEB/EDS)**

Pour quantifier la quantité de matériau filtrant restant après chaque série de lavages, les tissus imprégnés de sol-gel fluoré H, H', O', P' et H" ont été caractérisés par analyse dispersive en énergie (couplage MEB/EDS) avant et après les lavages.

La Microscopie Electronique à Balayage (MEB) est une technique puissante d'observation de la topographie des surfaces. Elle est fondée principalement sur la détection des électrons secondaires émergents de la surface sous l'impact d'un très fin pinceau d'électrons primaires qui balaye la surface observée et permet d'obtenir des images avec un pouvoir séparateur souvent inférieur à 5 nm et une grande profondeur de champ. L'instrument permet de former un pinceau quasi parallèle, très fin (jusqu'à quelques nanomètres), d'électrons fortement accélérés par des tensions réglables de 0,1 à 30 keV, de le focaliser sur la zone à examiner et de la balayer progressivement. Des détecteurs appropriés permettent de recueillir des signaux significatifs lors du balayage de la surface et d'en former diverses images significatives. Les images des échantillons des tissus ont été réalisées avec le MEB « Ultra 55 » de Zeiss. Les échantillons sont observés directement sans dépôt particulier (métal, carbone). Une faible tension d'accélération de 3 keV et le détecteur InLens (détecteur d'électrons rétrodiffusés et secondaires) permettent l'observation des échantillons et évitent un phénomène de charge trop important dû à la nature des tissus.

La Spectroscopie à rayons X à dispersion d'énergie EDS (Energy Dispersive X-Ray Spectroscopy) constitue une microanalyse électronique. L'impact du faisceau d'électrons sur l'échantillon produit des rayons X caractéristiques des éléments de l'échantillon. En pratique, il s'agit d'utiliser un détecteur RX (détecteur en énergie) installé sur le MEB (« Ultra 55 » de Zeiss). Cette technique de caractérisation permet d'obtenir des informations morphologiques (images) et chimiques (composition élémentaire). La composition élémentaire peut être obtenue sous forme de spectre ou de carte. Dans le cadre de l'analyse de matériaux textiles, la composition élémentaire est déterminée par acquisition de spectres. Deux à trois zones des échantillons sont analysées afin d'obtenir des quantifications moyennes représentatives. L'analyse de références (tissu sans sol-gel et sol-gel seul sous forme de monolithe) a été effectuée afin de s'assurer de la cohérence des résultats obtenus sur les échantillons avant/après lavages. Le détecteur « Quantax » de Bruker et le logiciel analytique pour l'EDS « Esprit » ont permis d'obtenir les résultats EDS pour les tissus testés.

Le tableau 14 ci-dessous résume d'une part les pourcentages massiques de silicium obtenus à partir de 3 zones de mesures sur chaque échantillon (H, H', H") et d'autre part la quantité de silicium restant après les lavages calculé comme suit :

$$\text{Silicium restant à x lavages (\%)} = \frac{\%_{\text{poids}} \text{ Si à x lavages}}{\%_{\text{poids}} \text{ Si avant lavages}} \times 100$$

**Tableau 14**

| Tissu | Pourcentage massique de Si (% en poids) | | | | | Si restant après les lavages (% en poids) | | | |
|---|---|---|---|---|---|---|---|---|---|
| | Nombre de lavages | | | | | Nombre de lavages | | | |
| | 0 | 1 | 5 | 10 | 25 | 1 | 5 | 10 | 25 |
| H | 4,16 | 2,52 | 0,06 | 0,17 | 0,05 | 61 | 1 | 4 | 1 |

(suite)

| Tissu | Pourcentage massique de Si (% en poids) | | | | | Si restant après les lavages (% en poids) | | | |
|---|---|---|---|---|---|---|---|---|---|
| | Nombre de lavages | | | | | Nombre de lavages | | | |
| | 0 | 1 | 5 | 10 | 25 | 1 | 5 | 10 | 25 |
| H' | 7,52 | 0,58 | 0,83 | 0,33 | 0,16 | 8 | 11 | 4 | 2 |
| O' | 8,14 | 2,94 | 0,29 | 0,12 | 0,03 | 36 | 4 | 2 | 0 |
| P' | 10,73 | 1,49 | 0,56 | 0,14 | 0,15 | 14 | 5 | 1 | 1 |
| H" | 3,45 | 0,71 | 0,44 | 0,89 | 0,14 | 21 | 13 | 26 | 4 |

Les images MEB de l'invention ont révélé la présence de matériau sol-gel à la surface des fibres même après 10 lavages. La composition élémentaire par analyse EDX confirme cette présence et indique ~20%wt de Silicium après 1, 5 et 10 lavages. Par ailleurs, la composition H" (stratégie II) étant à base de zirconium, cet élément est également qualifiable et quantifiable. La raie $L\alpha$ du zirconium a une énergie de 2,04 keV. Elle est toujours détectable et quantifiable après 25 lavages (0,68% en poids ce qui correspond à 14% de Zr restant après les 25 lavages).

- **Exposition aux polluants avant/après lavages**

**Tableau 15**

| Tissu | Décomposi tion des courbes de perçage | Modélisati on des courbes de pérçage | Capacité de filtration du salicylate de méthyle après les lavages (%) | | | | |
|---|---|---|---|---|---|---|---|
| | $|t_{0ppm}|^*$ (min) | $|t_{1/2}|^*$ (min) | Nombre de lavages | | | | |
| | | | 0 | 1 | 5 | 10 | 25 |
| H | 7,7 | 15,6 | 100 | 75 | 0 | - | - |
| H' | 20,0 | 37,1 | 100 | 0 | - | - | - |
| O' | 18,9 | 35,0 | 100 | 45 | 14 | 7 | 4 |
| P' | 7,9 | 33,0 | 100 | 55 | 34 | 0 | - |
| H" | 26,4 | 41,7 | 100 | 11 | 1 | - | - |
| N' + L'① | 24,2 | 44,6 | 100 | 31 | 8 | 3 | - |
| * Les temps caractéristiques ont été normalisés à un dépôt moyen de 20 g/m². | | | | | | | |

**Exemple 4 : Test d'abrasion**

- **Aspect visuel**

L'abrasion du dépôt de la formule A' a été testée suivant la norme NF EN ISO 12947-2:1998 et comparée au tissu initial sans sol-gel. Les résultats obtenus après 10000 tours d'abrasion (10x 1000 tours) avec une pression de 9 kPa sont présentés à la Figure 6.
En vue dessus, les tissus avec ou sans sol-gel présentent le même aspect : la présence de sol-gel n'influe donc pas sur la tenue à l'abrasion. En vue de profil, la photo montre que le tissu initial (sans sol-gel) est davantage pileux que le même tissu recouvert de la formule A'. Cette observation est un avantage pour le dépôt de sol-gel sur textile.

- **Microscopie Electronique à Balayage**

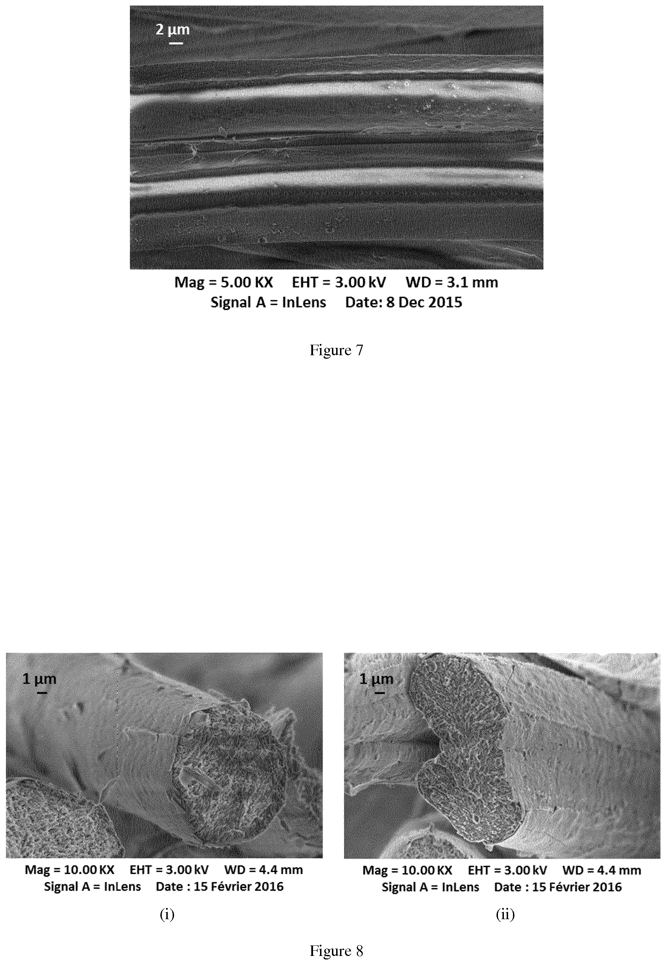

Le dépôt de la formule A' a été caractérisée au MEB en vue de dessus et en coupe avant et après abrasion.
Le tissu utilisé pour les dépôts est fait de fils et un fil de ce tissu est fait d'un mélange intime de fibres textiles en Kermel et en viscose. Les images MEB avant abrasion montrent la formation d'une gaine de sol-gel autour des fibres textiles (Figure 7 ; vue en coupe) et non autour des fils. Cette gaine de sol-gel est uniforme (Figure 8 ; vue de dessus) c'est-à-dire ne présente pas de fissures/craquelures. Après abrasion, on voit l'apparition de craquelures mais il reste de la matière en surface des fibres.

- **Spectroscopie FTIR-ATR**

Le tissu imprégné de sol-gel A' a été caractérisé par spectroscopie FTIR-ATR en mode réflexion avant et après abrasion. Les spectres sont enregistrés suivant 100 scans avec une résolution de 4 cm$^{-1}$ avec le module FTIR-ATR « Alpha-P » de Bruker.

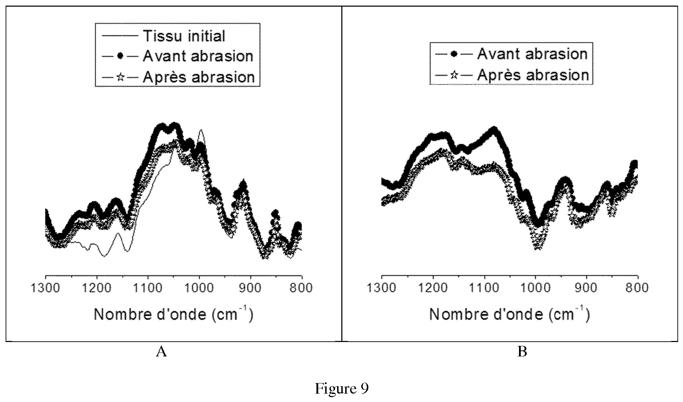

Le spectre IR (Figure 9) confirme la présence de sol-gel après abrasion. Le spectre IR obtenu après abrasion est logiquement moins intense que celui obtenu avant abrasion. L'intégration des spectres différentiels dans de la zone 1000-1300 cm$^{-1}$ permet d'évaluer la quantité de sol-gel restant après abrasion. Le tableau 15 ci-dessous résume les résultats.

**Tableau 16**

| | Aire obtenue par intégration de la zone 1000-1300 cm$^{-1}$ | Sol-gel restant après abrasion |
|---|---|---|
| Sol-gel A' avant abrasion | 3,22 | |
| Sol-gel A' après abrasion | 1,36 | 42% (1,36 / 3,22 x 100 = 42) |

Ces mesures confirment la présence de sol-gel après abrasion. L'utilisation de la spectroscopie FTIR-ATR indique la présence d'environ 40% de sol-gel sur le tissu à partir des spectres différentiels.

**Exemple 5 : Matériau textile imprégné avec granulés de sol-gel immobilisés**

**5.1 Préparation des granulés sol-gel**

Afin d'obtenir des granulés de sol-gel, un moule en nid d'abeille en polycarbonate de diamètre 3,0 mm ($\pm$ 0,3) de la société Plascore (référence PC-3.0-CL) a été utilisé. Les plaques de nid d'abeille de 3 mm de diamètre ont été découpées de manière à rentrer dans des boîtes de Petri de 11,5 et 10,8 cm de diamètre.

Parallèlement, la formule sol-gel TMOS/PhTMOS 85/15 a été préparée de la manière décrite ci-après. Dans un flacon en verre à fermeture hermétique, 40,41 mL de TMOS et 9,184 mL de PhTMOS sont ajoutés à un mélange de 45,83 mL d'eau ultra pure et 4,58 mL d'éthanol. La formule est agitée à température ambiante (20-22°C) au repère 10 de la plaque à agitateurs multiples IKA WERKE RO10 power (environ 1000 tr/min). Les réactifs ne sont pas miscibles lors de leurs ajouts puis avec l'avancement de la réaction, la formule devient limpide. Avant le dépôt en boîte de Pétri, la viscosité de la formule est de 19,9 mPa.s et le pH de 4,0-4,5.

Dans les boîtes de Petri de 11,5 et 10,8 cm de diamètre, un volume de sol-gel de 31,1 et 27,5 cm$^3$ est respectivement nécessaire pour obtenir une hauteur de sol-gel de 0,3 cm dans le moule en nid d'abeille. Une fois la formule sol-gel (liquide) placée dans la boîte de Petri contenant le nid d'abeille, un film étanche (aluminisé) a été collé sur la boîte de Petri. Les 3 boîtes de Petri préparées sont ensuite placées sur un portoir à étages et introduites dans un dessiccateur sans flux gazeux. Après 2 semaines à température ambiante, le sol-gel s'est détaché du nid d'abeille. Pour terminer le séchage des granulés, un film respirant est placé sur les boîtes de Pétri puis le dessiccateur est balayé par un flux gazeux d'argon autour de 1L/min.

Les granulés de sol-gel obtenus sont homogènes en taille. La pesée du flacon indique 14,3 g de granulés de sol-gel. La mesure d'un granulé cylindrique indique un diamètre d'environ 1,8 mm et une épaisseur d'environ 1,7 mm soit une réduction d'environ 45% par rapport aux dimensions du moule. Les granulés présentent une surface BET de 497 m$^2$/g et une surface DFT de 469 m$^2$/g. Le volume poreux est de 0,270 cm$^3$/g. La distribution de taille de pores indique 46% de microporosité et 54% de mésoporosité.

**5.2 Dépôt des granulés sur textile**

Afin d'augmenter la masse surfacique de sol-gel, le dépôt envisagé consiste à immobiliser les granulés de sol-gel par emprisonnement entre deux couches de matériaux textiles dans des zones de confinement définies par couture.

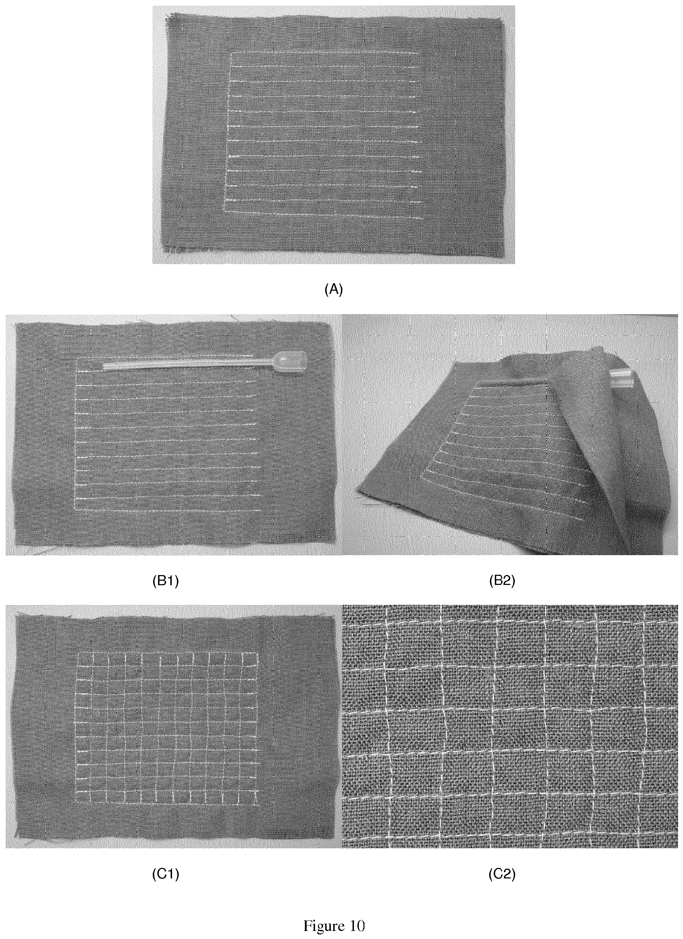

Les photos représentées à la Figure 10 illustrent ce procédé d'immobilisation des granulés de sol-gel. La photo (A) montre la définition les lignes de confinement par couture sur une zone d'environ 10 x 10 cm. Deux couches de Kermel/viscose 50/50 ayant une perméabilité à l'air d'environ 680 L/m$^2$.s ont été utilisées. L'introduction des granulés de sol-gel a été réalisée dans chaque ligne à l'aide d'une pipette permettant d'atteindre l'extrémité de la ligne de confinement (Photos (B1) et (B2)). Après l'introduction de 5 granulés dans chaque ligne de confinement, une couture a été réalisée pour finir de délimiter la zone de confinement. De la même façon, 5 granulés ont été introduits jusqu'à la nouvelle extrémité définie précédemment puis une nouvelle couture a été réalisée pour délimiter une nouvelle zone de confinement. Ainsi, de cette façon, l'ensemble de la zone initiale d'environ 10 x 10 cm a été recouverte de 11 x 11 cm de zones de confinement contenant chacune 5 granulés de sol-gel. Les photos (C1) et (B2) montrent le résultat final.

Le matériau textile obtenu est homogène, régulier et souple comportant une masse de 2,94 g de granulés TMOS/PhTMOS 85/15 sur une surface de 112 cm$^2$ de tissu Kermel/viscose 50/50 soit une masse surfacique de 262 g/m$^2$ de sol-gel.

La perméabilité à l'air du tissu avec les granulés de sol-gel indique une valeur moyenne de 702 L/m$^2$.s tandis que le même tissu sans les granulés de sol-gel indique une valeur de 680 L/m$^2$.s (suivant norme ISO 9237 sous 100 Pa). Malgré la masse surfacique importante de sol-gel, l'incorporation des granulés n'influence donc pas la perméabilité à l'air.

Un test de filtration au salicylate de méthyle a été réalisé avec le tissu préparé ci-dessus avec et sans granulés de sol-gel. Celui-ci a été découpé suivant un emporte-pièce de diamètre 37 mm préalablement cousu.

Les pesées des cercles découpés indiquent :

| Référence | Masse |
|---|---|
| Tissu initial sans granulés de sol-gel | 354 mg |
| Tissu avec granulés de sol-gel | 704 mg |
| Granulés de sol-gel (mg) | 350 mg |
| Granulés de sol-gel (g/m$^2$) | 325 g/m$^2$ |

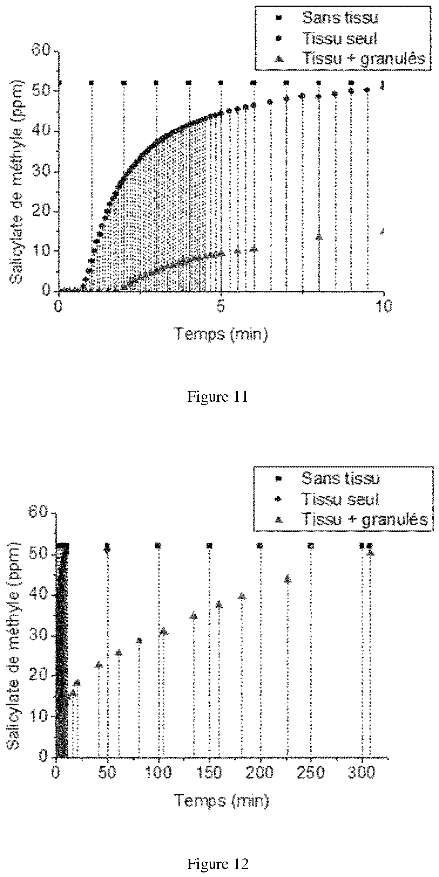

Les résultats de filtration montrent qu'un net écart de performance de filtration est observé entre le textile initial et le textile incorporant les granulés (Figure 11). Néanmoins, la courbe de perçage obtenue avec le textile incorporant les granulés n'a pas la forme habituelle en « S ». Néanmoins pour tenter de chiffrer les résultats obtenus, le calcul de l'aire sous la courbe de perçage a été utilisé. Pour cela, les aires des courbes de perçage du textile initial sans granulés et du textile incorporant les granulés de sol-gel ont été comparées à l'aire sans tissu afin de déterminer le passage du salicylate de méthyle exprimé en pourcentage. Les calculs effectués à l'aide du logiciel Origin à 10 min et 300 min ainsi que les courbes correspondantes sont présentés ci-dessous.

| Test | Integration sur 10 min Aire (u.a.) | Passage du salicylate de methyle apres 10 min | Integration sur 300 min Aire (u.a.) | Passage du salicylate de methyle apres 300 min |
|---|---|---|---|---|
| Sans tissu | 520 | 100% | 15990 | 100% |
| Tissu seul | 377 | 73% | 15668 | 98% |
| Tissu + granulés | 81 | 16% | 10830 | 68% |

Les résultats chiffrés de filtration du salicylate de méthyle montrent bien l'intérêt de l'immobilisation des granulés de sol-gel entre deux couches de matériaux textiles. Il sera encore plus important lorsqu' au moins l'une des deux couches est un matériau textile imprégné selon l'invention.

**Revendications**

1. Procédé de revêtement d'un matériau textile avec un matériau sol-gel, ledit procédé comprenant les étapes suivantes :

   a) fournir une composition de revêtement comprenant un solvant aqueux et un précurseur organosilicé,
   b) imprégner le matériau textile par foulardage avec la composition de revêtement,
   c) sécher le matériau textile imprégné,

   **caractérisé en ce que** la composition de revêtement est exempte d'acide polycarboxylique et de catalyseur.

2. Procédé selon la revendication 1, **caractérisé en ce que** la composition de revêtement est également exempte de surfactant.

3. Procédé selon la revendication 1 ou 2, **caractérisé en ce que** le matériau textile est un tissu, un non tissé ou un tricot, de préférence un tissu.

4. Procédé selon l'une quelconque des revendications précédentes, **caractérisé en ce que** le matériau textile comprend des fibres comportant des fonctions hydrolysables, telles que des fonctions hydroxyles.

5. Procédé selon l'une quelconque des revendications précédentes, **caractérisé en ce que** le solvant aqueux est de l'eau ou un mélange d'eau et d'un solvant organique.

6. Procédé selon l'une quelconque des revendications précédentes, **caractérisé en ce que** le précurseur organosilicé est choisi parmi le tétraméthoxysilane (TMOS), le tétraéthoxysilane (TEOS), le méthyl triméthoxysilane (MTM), le méthyl triéthoxysilane (MTE), le phényltriéméthoxysilane (PhTMOS), le phényltriéthoxysilane (PhTEOS), un fluoroalkyltriméthoxysilane, un fluoroalkyltriéthoxysilane, un chloroalkylméthoxysilane, un chloroalkyléthoxysilane, un aminopropyltriméthoxysilane (APTES), un aminopropyltriéthoxysilane (APTMS), le (3-glycidyloxypropyl)triméthoxysilane (GPTMOS), le (3-glycidyloxypropyl)triéthoxysilane (GPTEOS) et leurs mélanges, de préférence parmi le tétraméthoxysilane (TMOS), le méthyl triméthoxysilane (MTM), le phényltriméthoxysilane (PhTMOS), un fluoroalkyltriméthoxysilane, un chloroalkylméthoxysilane, un aminopropyltriéthoxysilane (APTES), le (3-glycidyloxypropyl)triméthoxysilane (GPTMOS) et leurs mélanges.

7. Procédé selon la revendication 6, **caractérisé en ce que** le précurseur organosilicé est le tétraméthoxysilane (TMOS).

8. Procédé selon la revendication 6, **caractérisé en ce que** le précurseur organosilicé est un mélange de tétraméthoxysilane (TMOS) avec un ou plusieurs précurseurs choisis parmi le méthyl triméthoxysilane (MTM), le méthyl triéthoxysilane (MTE), le phényltriméthoxysilane (PhTMOS), le phényltriéthoxysilane (PhTEOS), un fluoroalkyltriméthoxysilane, un fluoroalkyltriéthoxysilane, un chloroalkylméthoxysilane (ClTMOS), un chloroalkyléthoxysilane, un aminopropyltriéthoxysilane (APTES), le (3-glycidyloxypropyl)triméthoxysilane (GPTMOS) et leurs mélanges.

9. Procédé selon la revendication 8, **caractérisé en ce que** le précurseur organosilicé est un mélange de tétraméthoxysilane (TMOS) avec le (3-glycidyloxypropyl)triméthoxysilane (GPTMOS).

10. Procédé selon l'une quelconque des revendications précédentes, **caractérisé en ce qu'**il comporte plusieurs cycles successifs d'imprégnation par foulardage.

11. Procédé selon l'une quelconque des revendications précédentes, **caractérisé en ce qu'**il comprend, avant l'étape b), une étape d'application d'une composition de pré-revêtement comprenant un solvant organique et un alcoxyde de zirconium, ladite composition de pré-revêtement étant exempt d'acide polycarboxylique et de catalyseur.

12. Procédé selon l'une quelconque des revendications précédentes, **caractérisé en ce qu'**il comprend en outre une étape d'immobilisation de granulés sol-gel sur au moins l'une des deux faces du matériau textile imprégné.

13. Procédé selon la revendication 12, **caractérisé en ce que** l'étape d'immobilisation de granulés de sol-gel est mise en oeuvre après l'étape de séchage c).

14. Procédé selon la revendication 12 ou 13, **caractérisé en ce qu'**il comprend, après l'étape de séchage c), l'application d'une deuxième couche de matériau textile sur le matériau textile imprégné.

15. Procédé selon la revendication 14, **caractérisé en ce que** la deuxième couche de matériau textile est solidarisé avec le matériau textile imprégné, notamment par coutures, soudures ou par collage.

16. Composition de revêtement comprenant un solvant aqueux et un précurseur organosilicé, **caractérisée en ce qu'**elle est exempte d'acide polycarboxylique et de catalyseur, le solvant aqueux représentant 65 à 92% en volume de la composition de revêtement,
le solvant aqueux contenant 50% à 100%, de préférence 85% à 100% en volume d'eau.

17. Composition selon la revendication 16, **caractérisé en ce que** le solvant aqueux est de l'eau ou un mélange d'eau et d'un solvant organique.

18. Composition selon la revendication 16 ou 17, **caractérisée en ce que** le précurseur organosilicé est choisi parmi le tétraméthoxysilane (TMOS), le tétraéthoxysilane (TEOS), le méthyl triméthoxysilane (MTM), le méthyl triéthoxysilane (MTE), le phényltriémthoxysilane (PhTMOS), le phényltriéthoxysilane (PhTEOS), un fluoroalkyltriméthoxysilane, un fluoroalkyltriéthoxysilane, un chloroalkylméthoxysilane, un chloroalkyltriéthoxysilane, un aminopropyltriéthoxysilane, le (3-glycidyloxypropyl)triméthoxysilane (GPTMOS) et leurs mélanges, de préférence parmi le tétraméthoxysilane (TMOS), le méthyl triméthoxysilane (MTM), le phényltriémthoxysilane (PhTMOS), un fluoroalkyltriméthoxysilane, un fluoroalkyltriéthoxysilane, un chloroalkylméthoxysilane, un aminopropyltriéthoxysilane, le (3-glycidyloxypropyl)triméthoxysilane (GPTMOS) et leurs mélanges.

19. Composition selon la revendication 18, **caractérisée en ce que** le précurseur organosilicé est le tétraméthoxysilane (TMOS).

20. Composition selon la revendication 18, **caractérisée en ce que** le précurseur organosilicé est un mélange de tétraméthoxysilane (TMOS) avec un précurseur choisi parmi le méthyl triméthoxysilane (MTM), le méthyl triéthoxysilane (MTE), le phényltriémthoxysilane (PhTMOS), le phényltriéthoxysilane (PhTEOS), un fluoroalkyltriméthoxysilane, un fluoroalkyltriéthoxysilane, un chloroalkylméthoxysilane, un chloroalkyltriéthoxysilane , un aminopropyltriéthoxysilane, le (3-glycidyloxypropyl)triméthoxysilane (GPTMOS) et leurs mélanges.

21. Composition selon la revendication 20, **caractérisée en ce que** le précurseur organosilicé est un mélange de tétraméthoxysilane (TMOS) avec le (3-glycidyloxypropyl)triméthoxysilane (GPTMOS).

22. Composition selon la revendication 20, **caractérisée en ce que** le précurseur organosilicé est un mélange de tétraméthoxysilane (TMOS) avec le phényltriémthoxysilane (PhTMOS).

23. Matériau textile imprégné obtenu selon le procédé de revêtement selon l'une quelconque des revendications 1 à 15.

24. Matériau textile imprégné selon la revendication 23, **caractérisé en ce que** le matériau sol-gel forme un gainage des fibres du matériau textile.

25. Matériau textile selon la revendication 23 ou 24, **caractérisé en ce qu'**il présente une surface spécifique $S_{BET}$, déterminée à partir des isothermes d'adsorption à l'aide du modèle de Brunauer, Emmet et Teller (BET), comprise entre $330 \pm 30$ et $880 \pm 30$ m$^2$.g$^{-1}$, notamment entre $540 \pm 30$ et $880 \pm 30$ m$^2$.g$^{-1}$.

26. Matériau textile selon l'une quelconque des revendications 23 à 25, **caractérisé en ce qu'**il présente une proportion de micropores supérieure à 0 %, de préférence supérieure à 30 % et plus préférentiellement encore supérieure à 50 %.

27. Matériau textile selon l'une quelconque des revendications 23 à 26, **caractérisé en ce qu'**il présente une proportion de mésopores inférieure à 100 %, de préférence inférieure à 70 % et plus préférentiellement encore inférieure à 50 %.

28. Matériau textile selon l'une quelconque des revendications 23 à 27, **caractérisé en ce qu'**il présente une masse surfacique de 1 à 500 g/m$^2$, de préférence de 5 à 400 g/m$^2$, de préférence encore de 10 à 300 g/m$^2$.

29. Matériau textile selon l'une quelconque des revendications 23 à 28, **caractérisé en ce qu'**il comporte en outre des granulés sol-gel immobilisés sur au moins une de ses faces.

30. Matériau textile selon la revendication 29, **caractérisé en ce qu'**il présente une masse surfacique de 60 à 500 g/m$^2$, de préférence de 80 à 400 g/m$^2$ et de préférence encore de 100 à 300 g/m$^2$.

31. Filtre de gaz comprenant le matériau textile imprégné selon l'une quelconque des revendications 23 à 30.

32. Equipement de protection individuelle comprenant le matériau textile imprégné selon l'une quelconque des revendications 23 à 30.

33. Equipement de protection individuelle selon la revendication 32, **caractérisé en ce qu'**il s'agit d'un équipement de protection individuelle NBC.

**Patentansprüche**

1. Verfahren zum Beschichten eines Textilmaterials mit einem Sol-Gel-Material, wobei das Verfahren die folgenden Schritte umfasst:

   a) Bereitstellen einer Beschichtungszusammensetzung, die ein wässriges Lösungsmittel und einen siliziumorganischen Vorläufer umfasst,
   b) Imprägnieren des Textilmaterials durch Foulardieren mit der Beschichtungszusammensetzung,
   c) Trocknen des imprägnierten Textilmaterials,

   **dadurch gekennzeichnet, dass** die Beschichtungszusammensetzung frei von Polycarbonsäure und Katalysator ist.

2. Verfahren nach Anspruch 1, **dadurch gekennzeichnet, dass** die Beschichtungszusammensetzung auch frei von Tensid ist.

3. Verfahren nach Anspruch 1 oder 2, **dadurch gekennzeichnet, dass** das Textilmaterial ein Gewebe, ein Vlies oder ein Gestrick/Gewirk, vorzugsweise ein Gewebe, ist.

4. Verfahren nach einem der vorhergehenden Ansprüche, **dadurch gekennzeichnet, dass** das Textilmaterial Fasern umfasst, die hydrolysierbare Funktionen, wie Hydroxyfunktionen, umfassen.

5. Verfahren nach einem der vorhergehenden Ansprüche, **dadurch gekennzeichnet, dass** das wässrige Lösungsmittel Wasser oder eine Mischung aus Wasser und einem organischen Lösungsmittel ist.

6. Verfahren nach einem der vorhergehenden Ansprüche, **dadurch gekennzeichnet, dass** der siliziumorganische Vorläufer ausgewählt ist aus Tetramethoxysilan (TMOS), Tetraethoxysilan (TEOS), Methyltrimethoxysilan (MTM), Methyltriethoxysilan (MTE), Phenyltrimethoxysilan (PhTMOS), Phenyltriethoxysilan (PhTEOS), einem Fluoralkyltrimethoxysilan, einem Fluoralkyltriethoxysilan, einem Chloralkylmethoxysilan, einem Chloralkylethoxysilan, einem Aminopropyltrimethoxysilan (APTES), einem Aminopropyltriethoxysilan (APTMS), (3-Glycidyloxypropyl)trimethoxysilan (GPTMOS), (3-Glycidyloxypropyl)triethoxysilan (GPTEOS) und Mischungen davon, vorzugsweise ausgewählt aus Tetramethoxysilan (TMOS), Methyltrimethoxysilan (MTM), Phenyltrimethoxysilan (PhTMOS), einem Fluoralkyltrimethoxysilan, einem Chloralkylmethoxysilan, einem Aminopropyltriethoxysilan (APTES), (3-Glycidyloxypropyl)trimethoxysilan (GPTMOS) und Mischungen davon.

7. Verfahren nach Anspruch 6, **dadurch gekennzeichnet, dass** der siliziumorganische Vorläufer Tetramethoxysilan (TMOS) ist.

8. Verfahren nach Anspruch 6, **dadurch gekennzeichnet , dass** der siliziumorganische Vorläufer ein Gemisch aus Tetramethoxysilan (TMOS) mit einem oder mehreren Vorläufern ausgewählt aus Methyltrimethoxysilan (MTM), Methyltriethoxysilan (MTE), Phenyltrimethoxysilan (PhTMOS), Phenyltriethoxysilan (PhTEOS), einem Fluoralkyltrimethoxysilan, einem Fluoralkyltriethoxysilan, einem Chloralkylmethoxysilan (CITMOS), einem Chloralkylethoxysilan, einem Aminopropyltriethoxysilan (APTES), (3-Glycidyloxypropyl)trimethoxysilan (GPTMOS) und Mischungen davon ist.

9. Verfahren nach Anspruch 8, **dadurch gekennzeichnet, dass** der siliziumorganische Vorläufer eine Mischung aus Tetramethoxysilan (TMOS) mit (3-Glycidyloxypropyl)trimethoxysilan (GPTMOS) ist.

10. Verfahren nach einem der vorhergehenden Ansprüche, **dadurch gekennzeichnet, dass** es mehrere aufeinanderfolgende Imprägnierungszyklen durch Foulardieren umfasst.

11. Verfahren nach einem der vorhergehenden Ansprüchen, **dadurch gekennzeichnet, dass** es vor dem Schritt b) einen Schritt eines Aufbringens einer Vorbeschichtungszusammensetzung umfassend ein organisches Lösungsmittel und ein Zirkoniumalkoxid umfasst, wobei die Vorbeschichtungszusammensetzung frei von Polycarbonsäure und Katalysator ist.

12. Verfahren nach einem der vorhergehenden Ansprüche, **dadurch gekennzeichnet, dass** es ferner einen Schritt eines Immobilisierens von Sol-Gel-Körnchen auf mindestens einer der beiden Seiten des imprägnierten Textilmaterials umfasst.

13. Verfahren nach Anspruch 12, **dadurch gekennzeichnet, dass** der Schritt des Immobilisierens von Sol-Gel-Körnchen nach dem Trocknungsschritt c) durchgeführt wird.

14. Verfahren nach Anspruch 12 oder 13, **dadurch gekennzeichnet, dass** es nach dem Trocknungsschritt c) das Aufbringen einer zweiten Schicht aus Textilmaterial auf das imprägnierte Textilmaterial umfasst.

15. Verfahren nach Anspruch 14, **dadurch gekennzeichnet, dass** die zweite Schicht aus Textilmaterial mit dem imprägnierten Textilmaterial verbunden wird, insbesondere durch Nähen, Schweißen oder durch Kleben.

16. Beschichtungszusammensetzung, umfassend ein wässriges Lösungsmittel und einen siliziumorganischen Vorläufer, **dadurch gekennzeichnet, dass** sie frei von Polycarbonsäure und Katalysator ist, wobei das wässrige Lösungsmittel 65 bis 92 Volumen-% der Beschichtungszusammensetzung darstellt, und wobei das wässrige Lösungsmittel 50 bis 100%, vorzugsweise 85 bis 100% Volumen-% Wasser umfasst.

17. Zusammensetzung nach Anspruch 16, **dadurch gekennzeichnet, dass** das wässrige Lösungsmittel Wasser oder eine Mischung aus Wasser und einem organischen Lösungsmittel ist.

18. Zusammensetzung nach Anspruch 16 oder 17, **dadurch gekennzeichnet, dass** der siliziumorganische Vorläufer ausgewählt ist aus Tetramethoxysilan (TMOS), Tetraethoxysilan (TEOS), Methyltrimethoxysilan (MTM), Methyltriethoxysilan (MTE), Phenyltrimethoxysilan (PhTMOS), Phenyltriethoxysilan (PhTEOS), einem Fluoralkyltrimethoxysilan, einem Fluoralkyltriethoxysilan, einem Chloralkylmethoxysilan, einem Chloralkyltriethoxysilan, einem Aminopropyltriethoxysilan, (3-Glycidyloxypropyl)trimethoxysilan (GPTMOS) und Mischungen davon, vorzugsweise ausgewählt aus Tetramethoxysilan (TMOS), Methyltrimethoxysilan (MTM), Phenyltrimethoxysilan (PhTMOS), einem Fluoralkyltrimethoxysilan, einem Fluoralkyltriethoxysilan, einem Chloralkylmethoxysilan, einem Aminopropyltriethoxysilan, (3-Glycidyloxypropyl)trimethoxysilan (GPTMOS) und Mischungen davon.

19. Zusammensetzung nach Anspruch 18, **dadurch gekennzeichnet, dass** der siliziumorganische Vorläufer Tetramethoxysilan (TMOS) ist.

20. Zusammensetzung nach Anspruch 18, **dadurch gekennzeichnet , dass** der siliziumorganische Vorläufer ein Gemisch aus Tetramethoxysilan (TMOS) mit einem Vorläufer ausgewählt aus Methyltrimethoxysilan (MTM), Methyltriethoxysilan (MTE), Phenyltrimethoxysilan (PhTMOS), Phenyltriethoxysilan (PhTEOS), einem Fluoralkyltrimethoxysilan, einem Fluoralkyltriethoxysilan, einem Chloralkylmethoxysilan, einem Chloralkyltriethoxysilan, einem Aminopropyltriethoxysilan, (3-Glycidyloxypropyl)trimethoxysilan (GPTMOS) und Mischungen davon ist.

21. Zusammensetzung nach Anspruch 20, **dadurch gekennzeichnet, dass** der siliziumorganische Vorläufer eine Mischung aus Tetramethoxysilan (TMOS) mit (3-Glycidyloxypropyl)trimethoxysilan (GPTMOS) ist.

22. Zusammensetzung nach Anspruch 20, **dadurch gekennzeichnet, dass** der siliziumorganische Vorläufer eine Mischung aus Tetramethoxysilan (TMOS) mit Phenyltrimethoxysilan (PhTMOS) ist.

23. Imprägniertes Textilmaterial, erhalten nach dem Beschichtungsverfahren nach einem der Ansprüche 1 bis 15.

24. Imprägniertes Textilmaterial nach Anspruch 23, **dadurch gekennzeichnet, dass** das Sol-Gel-Material eine Ummantelung der Fasern des Textilmaterials bildet.

25. Textilmaterial nach Anspruch 23 oder 24, **dadurch gekennzeichnet, dass** es eine spezifische Oberfläche $S_{BET}$, ermittelt aus den Adsorptionsisothermen mit Hilfe des Brunauer, Emmet und Teller (BET) Modells, zwischen $330 \pm 30$ und $880 \pm 30$ m$^2$.g$^{-1}$, insbesondere zwischen $540 \pm 30$ und $880 \pm 30$ m$^2$.g$^{-1}$ aufweist.

26. Textilmaterial nach einem der Ansprüche 23 bis 25, **dadurch gekennzeichnet, dass** es einen Anteil an Mikroporen größer 0 %, bevorzugt größer 30 % und noch bevorzugter größer 50 % aufweist.

27. Textilmaterial nach einem der Ansprüche 23 bis 26, **dadurch gekennzeichnet, dass** es einen Anteil an Mesoporen von weniger als 100 %, vorzugsweise weniger als 70 % und noch bevorzugter weniger als 50 % aufweist.

28. Textilmaterial nach einem der Ansprüche 23 bis 27, **dadurch gekennzeichnet, dass** es eine flächenbezogene Masse von 1 bis 500 g/m$^2$, vorzugsweise von 5 bis 400 g/m$^2$, besonders bevorzugt von 10 bis 300 g/m$^2$ aufweist.

29. Textilmaterial nach einem der Ansprüche 23 bis 28, **dadurch gekennzeichnet, dass** es außerdem auf mindestens einer seiner Seiten immobilisierte Sol-Gel-Körnchen umfasst.

30. Textilmaterial nach Anspruch 29, **dadurch gekennzeichnet, dass** es eine flächenbezogene Masse von 60 bis 500 g/m$^2$, vorzugsweise von 80 bis 400 g/m$^2$ und besonders bevorzugt von 100 bis 300 g/m$^2$ aufweist.

31. Gasfilter, umfassend das imprägnierte Textilmaterial nach einem der Ansprüche 23 bis 30.

32. Persönliche Schutzausrüstung, umfassend das imprägnierte Textilmaterial nach einem der Ansprüche 23 bis 30.

33. Persönliche Schutzausrüstung nach Anspruch 32, **dadurch gekennzeichnet, dass** es sich um eine persönliche ABC-Schutzausrüstung handelt.

## Claims

1. Method for coating a textile material with a sol-gel material, said method comprising the steps of

   a) providing a coating composition comprising an aqueous solvent and an organosilicon precursor,
   b) impregnating the textile material with the coating composition by means of pad finishing,
   c) drying the impregnated textile material,

   **characterized in that** the coating composition contains no polycarboxylic acid or catalyst.

2. Method according to claim 1, wherein the coating composition also contains no surfactant.

3. Method according to claim 1 or 2, wherein the textile material is a woven fabric, a nonwoven fabric, or a knit, preferably a woven fabric.

4. Method according to any one of the preceding claims, wherein the textile material comprises fibers having hydrolysable functional groups, such as hydroxyl functional groups.

5. Method according to any one of the preceding claims, wherein the aqueous solvent is water or a mixture of water and an organic solvent.

6. Method according to any one of the preceding claims, wherein the organosilicon precursor is selected among tetramethoxysilane (TMOS), tetraethoxysilane (TEOS), methyl trimethoxysilane (MTM), methyl triethoxysilane (MTE), phenyltrimethoxysilane (PhTMOS), phenyltriethoxysilane (PhTEOS), a fluoroalkyltrimethoxysilane, a fluoroalkyltriethoxysilane, a chloroalkylmethoxysilane, a chloroalkylethoxysilane, an aminopropyltrimethoxysilane (APTES), aminopropyltriethoxysilane (APTMS), (3-glycidyloxypropyl)trimethoxysilane (GPTMOS), (3-glycidyloxypropyl) triethoxysilane (GPTEOS), and mixtures thereof; preferably among tetramethoxysilane (TMOS), methyl trimethoxysilane (MTM), phenyltrimethoxysilane (PhTMOS), a fluoroalkyltrimethoxysilane, a chloroalkylmethoxysilane, an aminopropyltriethoxysilane (APTES), (3-glycidyloxypropyl) trimethoxysilane (GPTMOS), and mixtures thereof.

7. Method according to claim 6, wherein the organosilicon precursor is tetramethoxysilane (TMOS).

8. Method according to claim 6, wherein the organosilicon precursor is a mixture of tetramethoxysilane (TMOS) with one or more precursors selected among methyl trimethoxysilane (MTM), methyl triethoxysilane (MTE), phenyltrimethoxysilane (PhTMOS), phenyltriethoxysilane (PhTEOS), a fluoroalkyltrimethoxysilane, a fluoroalkyltriethoxysilane, a chloroalkylmethoxysilane (ClTMOS), a chloroalkylethoxysilane, an aminopropyltriethoxysilane (APTES), (3-glycidyloxypropyl) trimethoxysilane (GPTMOS), and mixtures thereof.

9. Method according to claim 8, wherein the organosilicon precursor is a mixture of tetramethoxysilane (TMOS) with (3-glycidyloxypropyl) trimethoxysilane (GPTMOS).

10. Method according to any one of the preceding claims, wherein it comprises several successive cycles of impregnation by pad finishing.

11. Method according to any one of the preceding claims, wherein it comprises, before step b), a step of applying a precoating composition comprising an organic solvent and a zirconium alkoxide, said precoating composition containing no polycarboxylic acid or catalyst.

12. Method according to any one of the preceding claims, wherein it further comprises a step of immobilizing sol-gel pellets on at least one of the two sides of the impregnated textile material.

13. Method according to claim 12, wherein the step of immobilizing the sol-gel pellets is carried out after the drying step c).

14. Method according to claim 12 or 13, wherein it comprises, after the drying step c), the application of a second layer of textile material on the impregnated textile material.

15. Method according to claim 14, wherein the second layer of textile material is secured to the impregnated textile material, in particular by stitching, welding, or gluing.

16. Coating composition comprising an aqueous solvent and an organosilicon precursor, **characterized in that** it contains no polycarboxylic acid or catalyst, said aqueous solvent representing 65 to 92% by volume of the coating composition,
said aqueous solvent containing 50% to 100%, preferably 85% to 100% water by volume.

17. Composition according to claim 14, wherein the aqueous solvent is water or a mixture of water and an organic solvent.

18. Composition according to claim 16 or 17, wherein the organosilicon precursor is selected among tetramethoxysilane (TMOS), tetraethoxysilane (TEOS), methyl trimethoxysilane (MTM), methyl triethoxysilane (MTE), phenyltrimethoxysilane (PhTMOS), phenyltriethoxysilane (PhTEOS), a fluoroalkyltrimethoxysilane, a fluoroalkyltriethoxysilane, a chloroalkylmethoxysilane, a chloroalkyltriethoxysilane, an aminopropyltriethoxysilane, (3-glycidyloxypropyl)trimethoxysilane (GPTMOS), and mixtures thereof; preferably among tetramethoxysilane (TMOS), methyl trimethoxysilane (MTM), phenyltrimethoxysilane (PhTMOS), a fluoroalkyltrimethoxysilane, a fluoroalkyltriethoxysilane, a chloroalkylmethoxysilane, an aminopropyltriethoxysilane, (3-glycidyloxypropyl) trimethoxysilane (GPTMOS), and mixtures thereof.

19. Composition according to claim 18, wherein the organosilicon precursor is tetramethoxysilane (TMOS).

20. Composition according to claim 18, wherein the organosilicon precursor is a mixture of tetramethoxysilane (TMOS) with a precursor selected among methyl trimethoxysilane (MTM), methyl triethoxysilane (MTE), phenyltrimethoxysilane (PhTMOS), phenyltriethoxysilane (PhTEOS), fluoroalkyltrimethoxysilane, fluoroalkyltriethoxysilane, chloroalkylmethoxysilane, chloroalkyltriethoxysilane, aminopropyltriethoxysilane, (3-glycidyloxypropyl)trimethoxysilane (GPTMOS), and mixtures thereof.

21. Composition according to claim 20, wherein the organosilicon precursor is a mixture of tetramethoxysilane (TMOS) with (3-glycidyloxypropyl) trimethoxysilane (GPTMOS).

22. Composition according to claim 20, wherein the organosilicon precursor is a mixture of tetramethoxysilane (TMOS) with phenyltrimethoxysilane (PhTMOS).

23. Impregnated textile material obtained using the coating method according to any one of claims 1 to 15.

24. Impregnated textile material according to claim 23, wherein the sol-gel material forms a sheathing around the fibers of the textile material.

25. Fabric according to claim 23 or 24, wherein it has a specific surface area $S_{BET}$, determined from adsorption isotherms using the Brunauer, Emmet and Teller (BET) model, between $330\pm30$ and $880\pm30$ $m^2.g^{-1}$, in particular between $540\pm30$ and $880\pm30$ $m^2.g^{-1}$.

26. Textile material according to any one of claims 23 to 25, wherein it has a micropore proportion greater than 0%, preferably greater than 30%, and even more preferably greater than 50%.

27. Textile material according to any one of claims 23 to 26, wherein it has a mesopore proportion of less than 100%, preferably less than 70%, and even more preferably less than 50%.

28. Textile material according to any one of claims 23 to 27, wherein it has a mass per unit area of 1 to 500 $g/m^2$, preferably from 5 to 400 $g/m^2$, more preferably from 10 to 300 $g/m^2$.

29. Textile material according to any one of claims 23 to 28, wherein it further comprises sol-gel pellets immobilized on at least one of its sides.

30. Textile material according to claim 29, wherein it has a mass per unit area of 60 to 500 $g/m^2$, preferably 80 to 400 $g/m^2$, and more preferably from 100 to 300 $g/m^2$.

31. Gas filter comprising the impregnated textile material according to any one of claims 23 to 30.

32. Personal protective equipment comprising the impregnated textile material according to any one of claims 23 to 30.

33. Personal protective equipment according to claim 32, wherein it is NBC personal protective equipment.

Figure 1

Figure 2

Figure 3

A                                                    B

Figure 4

A                                        B

Figure 5

A                                        B

Figure 6

Mag = 5.00 KX    EHT = 3.00 kV    WD = 3.1 mm
Signal A = InLens    Date: 8 Dec 2015

Figure 7

Mag = 10.00 KX    EHT = 3.00 kV    WD = 4.4 mm
Signal A = InLens    Date : 15 Février 2016

(i)

Mag = 10.00 KX    EHT = 3.00 kV    WD = 4.4 mm
Signal A = InLens    Date : 15 Février 2016

(ii)

Figure 8

Figure 9

(A)

(B1)                                          (B2)

(C1)                                          (C2)

Figure 10

Figure 11

Figure 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1468732 A2
- FR 2868956 A1
- WO 2015163969 A2
- FR 2819420 A1
- EP 1147072 A1
- US 2009223411 A1
- DE 102008010457 A1
- JP 2000119956 A

- CN 101787654
- CN 102371125
- CN 1632215
- DE 102005031711
- DE 202008016598
- SK 500372013
- FR 2984343 A1
- US 8926744 B2

**Littérature non-brevet citée dans la description**

- **BRZEZINSKI et al.** *Journal of Applied Polymer Science*, vol. 125 (4), 3058-3068
- **Q. WEI**. Surface Modification of Textiles. Woodhead Publishing Series in Textiles, 09 September 2009, 352
- *Chem. Eng. J.*, 2010, vol. 156 (3), 553-556
- *J. Colloid Interf. Sci.*, 2005, vol. 289, 249-261
- **M.-C. B. SALON** ; **M. ABDELMOULEH** ; **S. BOUFI** ; **M. N. BELGACEM** ; **A. GANDINI**. La condensation chimique d'alcoxydes de silicium sur la cellulose est connue pour apparaître après traitement thermique au-dessus de 100°C. *Langmuir*, 2005, vol. 18, 3203-3208
- **M. ABDELMOULEH** ; **S. BOUFI** ; **A. B. SALAH** ; **M. N. BELGACEM** ; **A. GANDINI**. *Interaction of Silane Coupling Agents with Cellulose*
- *J. Sol-Gel Sci. Technol.*, 2005, vol. 34, 103-109
- *CHEMICAL ABSTRACTS*, 23519-77-9
- *CHEMICAL ABSTRACTS*, 1071-76-7
- *CHEMICAL ABSTRACTS*, 14717-56-7

- *CHEMICAL ABSTRACTS*, 308847-92-9
- *CHEMICAL ABSTRACTS*, 204522-78-1
- **J. HUE** ; **M. DUPOY** ; **T. BORDY** ; **R. ROUSIER** ; **S. VIGNOUD** ; **B. SCHAERER** ; **T.-H. TRAN-THI** ; **C. RIVRON** ; **L. MUGHERLI** ; **P. KARPE**. Application: Quality of indoor air. *Sensors & Actuators B*, 2013, vol. 189, 194-198, http://dx.doi.org/10.1016/j.snb.2013.03.047
- *CHEMICAL ABSTRACTS*, 681-84-5
- *CHEMICAL ABSTRACTS*, 78-10-4
- *CHEMICAL ABSTRACTS*, 1185-55-3
- *CHEMICAL ABSTRACTS*, 429-60-7
- *CHEMICAL ABSTRACTS*, 51851-37-7
- *CHEMICAL ABSTRACTS*, 101947-16-4
- *CHEMICAL ABSTRACTS*, 919-30-2
- *CHEMICAL ABSTRACTS*, 2996-92-1
- *CHEMICAL ABSTRACTS*, 780-69-8
- *CHEMICAL ABSTRACTS*, 2530-83-8
- *CHEMICAL ABSTRACTS*, 64-17-5
- *CHEMICAL ABSTRACTS*, 75-05-8
- *CHEMICAL ABSTRACTS*, 110-15-6
- *CHEMICAL ABSTRACTS*, 123333-67-5